# EUROPEAN PATENT APPLICATION

(11) **EP 4 646 012 A1**
(43) Date of publication of application: **05.11.2025**
(21) Application number: 23910806.1
(22) Date of filing: 28.12.2023
(51) Int. Cl.: H04W 76/10, H04W 60/00

(54) **COMMUNICATION METHOD AND COMMUNICATION APPARATUS**

(30) Priority: 30.12.2022 CN 202211736079
(71) Applicant: Huawei Technologies Co., Ltd., Shenzhen, Guangdong 518129 (CN)
(72) Inventor: XU, Ling, Shenzhen, Guangdong 518129 (CN); HU, Xiange, Shenzhen, Guangdong 518129 (CN); YANG, Linping, Shenzhen, Guangdong 518129 (CN); QIANG, Li, Shenzhen, Guangdong 518129 (CN); CHANG, Junren, Shenzhen, Guangdong 518129 (CN)
(74) Representative: Maiwald GmbH
(86) International application number: PCT/CN2023/142639
(87) International publication number: WO 2024/140889

(57) **Abstract**

This application provides a communication method and a communication apparatus. The method includes: A terminal device receives a first message from a first network device, where the first message includes indication information indicating non-sharing of a network slice simultaneous registration group NSSRG, and the indication information indicates that slices do not share a same NSSRG. According to the method provided in embodiments of this application, if slices requested by the terminal device do not share a same NSSRG, the terminal device may receive a first message sent by a network device, and the terminal device may enable, based on the first message, a subsequently requested slice to share a same NSSRG. This helps the slices requested by the terminal device share the same NSSRG.

## Description

This application claims priority to Chinese Patent Application No. 202211736079.5, filed with the China National Intellectual Property Administration on December 30, 2022 and entitled "COMMUNICATION METHOD AND COMMUNICATION APPARATUS", which is incorporated herein by reference in its entirety.

### TECHNICAL FIELD

This application relates to the communication field, and in particular, to a communication method and a communication apparatus.

### BACKGROUND

If a terminal device supports a network slice simultaneous registration group (network slice simultaneous registration group, NSSRG) technology, when the terminal device accesses a network, it may be restricted that requested slices need to share a same NSSRG. In the NSSRG technology, single network slice selection assistance information (single network slice selection assistance information, S-NSSAI) included in each piece of configured network slice selection assistance information (configured network slice selection assistance information, configured NSSAI) is associated with one or more NSSRG values (values). If NSSRG values (value) associated with two pieces of S-NSSAI have a same value, it may be referred to as that the two pieces of S-NSSAI share a same NSSRG. For example, in a multi-network access scenario, slices requested by the terminal device when the terminal device accesses a network over a 3rd generation partnership project (3rd generation partnership project, 3GPP) access and a non-3GPP (non-3GPP) access may share a same NSSRG; or slices requested by the terminal device when the terminal device accesses different networks over a 3GPP access or a non-3GPP access may share a same NSSRG.

If the terminal device accesses the network without meeting the restriction, how to perform processing becomes a problem that needs to be urgently resolved.

### SUMMARY

This application provides a communication method and a communication apparatus, to help requested slices share a same NSSRG.

According to a first aspect, a communication method is provided. The method includes: A terminal device receives a first message from a first network device, where the first message includes indication information indicating non-sharing of a network slice simultaneous registration group NSSRG, and the indication information indicates that slices do not share a same NSSRG.

If slices requested by the terminal device do not share an NSSRG, the first network device may generate a first message, where the first message includes indication information indicating non-sharing of an NSSRG, and the indication information indicates that slices do not share a same NSSRG. The indication information indicating non-sharing of an NSSRG may alternatively be a slice rejection cause value for not sharing an NSSRG. The first network device may send the first message to the terminal device, and correspondingly, the terminal device receives the first message, and may enable, based on the first message, a requested slice to share a same NSSRG when requesting to register with a network from the first network device.

According to the communication method provided in this application, if slices requested by the terminal device do not share a same NSSRG, the terminal device may receive a first message sent by a network device, and the terminal device may enable, based on the first message, a subsequently requested slice to share a same NSSRG. This helps the slices requested by the terminal device share the same NSSRG.

With reference to the first aspect, in some implementations of the first aspect, before the terminal device receives the first message from the first network device, the method further includes: The terminal device initiates a first registration request message to the first network device over a first access, where the first registration request message includes a first requested slice; and the terminal device initiates a second registration request message to the first network device over a second access, where the second registration request message includes a second requested slice, and the second requested slice and the first requested slice do not share a same NSSRG. Before the terminal device initiates the second registration request message to the first network device over the second access, the terminal device may be in a registered state or a registration attempt state on the first access. The first access and the second access each are any one of a 3GPP access type and a non-3GPP access type.

The terminal device may initiate registration requests to a same network device over different accesses. The terminal device initiates the first registration request message to the first network device over the first access, and initiates the second registration request message to the first network device over the second access. If the first requested slice included in the first registration request message and the second requested slice included in the second registration request message do not share the same NSSRG, the first network device may send the first message to the terminal device.

The first message may act on the first access or may act on the second access. This is not limited in this application. If the first message acts on the first access, the first message is sent over the first access; or if the first message acts on the second access, the first message is sent over the second access.

According to the communication method provided in this application, if slices requested by the terminal device from a same network device do not share a same NSSRG, the network device may send a first message to the terminal device, and the terminal device may enable, based on the first message, a subsequently requested slice to share a same NSSRG. This helps the slices requested by the terminal device share the same NSSRG.

With reference to the first aspect, in some implementations of the first aspect, the first message is received over the first access or the second access.

If the terminal device receives the first message from the first network device over the first access, in a possible implementation, if the first message is a registration reject message or a deregistration message, it may indicate that the first network device rejects the first access of the terminal device, and the terminal device may re-send a registration request message to the first network device over the first access based on the first message, where a requested slice included in the registration request message and the second requested slice may share a same NSSRG.

If the terminal device receives the first message from the first network device over the second access, in a possible implementation, if the first message is a registration reject message, it may indicate that the first network device rejects the second access of the terminal device, and the terminal device may re-send a registration request message to the first network device over the second access based on the first message, where a requested slice included in the registration request message and the first requested slice may share a same NSSRG.

According to the communication method provided in this application, the first network device may reject any access of a same terminal device, so that flexibility is higher.

With reference to the first aspect, in some implementations of the first aspect, before the terminal device receives the first message from the first network device, the method further includes: The terminal device initiates a first registration request message to the first network device over a first access, where the first registration request message includes a first requested slice; and the terminal device initiates a second registration request message to a second network device over a second access, where the second registration request message includes a second requested slice, and the second requested slice and the first requested slice do not share a same NSSRG.

The terminal device may first send the first registration request message to the first network device over the first access, and then send the second registration request message to the second network device over the second access; or may first send the second registration request message to the second network device over the second access, and then send the first registration request message to the first network device over the first access. This is not limited in this application.

When the terminal device accesses different networks, if requested slices do not share a same NSSRG, a network device in any network may send a first message to the terminal device. Specifically, in a scenario in which the first terminal device first sends the first registration request message to the first network device over the first access, and then sends the second registration request message to the second network device over the second access, the first network device sends the first message to the terminal device, that is, the first network device first accessed by the terminal device sends the first message, and before the terminal device sends the second registration request message to the second network device over the second access, the terminal device may be in a registered state or a registration attempt state on the first access. In a scenario in which the first terminal device first sends the second registration request message to the second network device over the second access, and then sends the first registration request message to the first network device over the first access, the first network device sends the first message to the terminal device, that is, the first network device then accessed by the terminal device sends the first message.

According to the communication method provided in this application, the terminal device sends the first registration request message to the first network device, and sends a second registration request to a second device, where the first requested slice included in the first registration request message and the second requested slice included in the second registration request do not share the same NSSRG. The first network device may send the first message to the terminal device, and the terminal device may enable, based on the first message, a subsequently requested slice to share a same NSSRG. This helps the slices requested by the terminal device share the same NSSRG.

With reference to the first aspect, in some implementations of the first aspect, before the terminal device receives the first message from the first network device, the method further includes: The terminal device initiates a first session establishment request message to the first network device over a first access, where the first session establishment request message includes a first requested slice; and the terminal device initiates a second session establishment request message to a second network device over a second access, where the second session establishment request message includes a second requested slice, and the second requested slice and the first requested slice do not share a same NSSRG.

The terminal device initiates a session establishment request message to each of the first network device and the second network device. If requested slices do not share a same NSSRG, the first network device or the second network device sends a first message to the terminal device, where the first message includes indication information indicating non-sharing of an NSSRG, and the indication information indicates that slices do not share a same NSSRG.

According to the communication method provided in this application, the terminal device sends the first session establishment request message to the first network device over the first access, and sends the second session establishment request message to the second network device over the second access, where the first requested slice included in the first session establishment request message and the second requested slice included in the second session establishment request message do not share the same NSSRG. The first network device may send the first message to the terminal device, and the terminal device may enable, based on the first message, a subsequently requested slice to share a same NSSRG. This helps the slices requested by the terminal device share the same NSSRG.

With reference to the first aspect, in some implementations of the first aspect, the first message is one of a registration reject message, a registration accept message, a deregistration message, a configuration update command (configuration update command, CUC) message, a session establishment reject message, or a session release message. The registration reject message indicates that a registration request initiated by the terminal device is rejected; the registration accept message indicates that a registration request initiated by the terminal device is accepted; the deregistration message indicates the terminal device to perform deregistration; the configuration update command message is used to update a configuration of the terminal device; the session establishment reject message is used to reject a session establishment request of the terminal device; and the session release message is used to release a session established by the terminal device.

If the first message is the registration reject message, and the registration reject message indicates that the registration request initiated by the terminal device is rejected, the terminal device may re-initiate a registration request to the first network device based on the first message.

If the first message is the registration accept message, and the registration accept message indicates that the registration request initiated by the terminal device is accepted, the terminal device may determine, based on the first message, that the registration request is accepted.

If the first message is the deregistration message, and the deregistration message indicates the terminal device to perform deregistration, the terminal device may perform re-registration based on the first message.

If the first message is the configuration update command message, and the configuration update command message is used to update the configuration of the terminal device, the terminal device may update the configuration based on the first message.

If the first message is the session establishment reject message, and the session establishment reject message is used to reject the session establishment request of the terminal device, the terminal device may re-initiate a session establishment request based on the first message.

If the first message is the session release message, and the session release message is used to release the session established by the terminal device, the terminal device may re-establish a session based on the first message.

According to the communication method provided in this application, if slices do not share a same NSSRG, the terminal device may receive one of the registration reject message, the registration accept message, the deregistration message, the configuration update command message, the session establishment reject message, or the session release message, so that a slice subsequently requested by the terminal device shares a same NSSRG. This helps the slices requested by the terminal device share the same NSSRG.

With reference to the first aspect, in some implementations of the first aspect, if the first message is the deregistration message or the registration reject message, the first message further includes a registration reject cause value, and the registration reject cause value may be that no network slice is available.

If the first message is the deregistration message or the registration reject message, the first message further includes the registration reject cause value, and the registration reject cause value may be that no network slice is available, so that the terminal device determines a deregistration cause or a registration reject cause based on the first message, and a slice subsequently requested by the terminal device shares a same NSSRG. This helps the slices requested by the terminal device share the same NSSRG.

With reference to the first aspect, in some implementations of the first aspect, the first message further includes a slice that does not share an NSSRG.

The first message further includes the slice that does not share the NSSRG, so that the terminal device determines, based on the first message, the slice that does not share the NSSRG in the requested slices.

According to a second aspect, a communication method is provided. The method includes: A terminal device initiates a first registration request message to a first network device over a first access; the terminal device initiates a second registration request message to a second network device over a second access, where a sequence in which the terminal device initiates the first registration request message to the first network device over the first access and initiates the second registration request message to the second network device over the second access is not limited; the terminal device establishes a protocol data unit PDU session over the second access; and the terminal device initiates a third registration request message to the first network device over the second access, where the third registration request message includes a third requested slice, and if a slice associated with the PDU session and an allowed slice of the first access do not share a same network slice simultaneous registration group NSSRG, the third registration request message does not include the slice associated with the PDU session.

When moving from the second network device to the first network device over the second access, the terminal device needs to initiate a registration request to the first network device. If the terminal device is in a registered state or a registration attempt state for the first network device over the first access, and the terminal device determines that the slice associated with the PDU session and the allowed slice of the first access do not share the same NSSRG, when the terminal device initiates the registration request to the first network device, the registration request does not include the slice associated with the PDU. When the terminal device initiates the registration request to the first network device, the registration request may include the third requested slice, and the third requested slice and the allowed slice of the first access share a same NSSRG.

According to the communication method provided in this application, when the terminal device moves from the second network device to the first network device, the third requested slice included in the sent registration request message and the allowed slice of the first access share the same NSSRG, and the terminal device may directly access a coverage area of the first network device. This is simple and direct, and no additional indication is needed.

With reference to the second aspect, in some implementations of the second aspect, before the terminal device sends the third registration request message to the first network device over the second access, the method further includes: The terminal device releases the PDU session.

According to the communication method provided in this application, before accessing the first network device, the terminal device first releases the PDU session on the second network device, to avoid an access conflict.

With reference to the second aspect, in some implementations of the second aspect, the first registration request includes a first requested slice, and that the slice associated with the PDU session and the allowed slice of the first access do not share the same network slice simultaneous registration group NSSRG includes: The slice associated with the PDU session and the first requested slice do not share the same network slice simultaneous registration group NSSRG.

According to the communication method provided in this application, when the terminal device moves from the second network device to the first network device, the third requested slice included in the sent registration request message and the first requested slice share a same NSSRG, and the terminal device may directly access a coverage area of the first network device. This is simple and direct, and no additional indication is needed.

With reference to the second aspect, in some implementations of the second aspect, the second registration request includes a second requested slice.

According to the communication method provided in this application, even if the second registration request message does not include the slice, a corresponding function can also be implemented, thereby helping reduce signaling power consumption.

According to a third aspect, a communication method is provided. The method includes: A terminal device initiates a first registration request message to a first network device over a first access, where the first registration request message includes a first requested slice, and the terminal device succeeds in registration over the first access; the terminal device initiates a second registration request message to the first network device or a second network device over a second access, where the second registration request message includes a second requested slice, and the second requested slice and the first requested slice do not share a same network slice simultaneous registration group NSSRG; and the terminal device receives re-registration indication information from the first network device over the first access.

The terminal device sends a second registration request to the first network device or the second network device over the second access, where a slice included in the second registration request and the first requested slice do not share a same NSSRG. The first network device or the second network device accepts the registration request, and sends re-registration indication information to the terminal device over the first access. The terminal device performs re-registration based on the re-registration indication information over the first access.

According to the method provided in this application, when slices do not share an NSSRG, the first network device or the second network device indicates the terminal device to perform re-registration on an accessed request. This helps reduce impact on services requested by the slices.

With reference to the third aspect, in some implementations of the third aspect, the method further includes: The terminal device initiates a third registration message to the first network device based on the re-registration indication information, where the third registration message includes a third requested slice, and the third requested slice and the second requested slice share a same NSSRG.

After performing re-registration based on the re-registration indication information, the terminal device initiates the third registration message to the first network device, where the third registration message includes the third requested slice, and the third requested slice and the second requested slice share the same NSSRG.

According to the method provided in this application, the terminal device re-initiates the third registration message to the first network device based on the re-registration indication information, to ensure that the requested slices share the same NSSRG.

According to a fourth aspect, a communication method is provided. The method includes: A first network device sends a first message to a terminal device, where the first message includes indication information indicating non-sharing of a network slice simultaneous registration group NSSRG, and the indication information indicates that slices do not share a same NSSRG.

With reference to the fourth aspect, in some implementations of the fourth aspect, before the first network device sends the first message to the terminal device, the method further includes: The first network device receives a first registration request message from the terminal device, where the first registration request message includes a first requested slice; and the first network device updates NSSRG information, to obtain updated NSSRG information; and that the first network device sends the first message to the terminal device includes: If the first requested slice does not share a same NSSRG based on the updated NSSRG information, the first network device sends the first message to the terminal device.

Time at which the terminal device sends the first registration request to the first network device is close to time at which the first network device updates the NSSRG information, and the first network device has not sent the updated NSSRG information to the terminal device. In this case, if the first requested slice does not share the same NSSRG based on the updated NSSRG information, the first network device sends the first message to the terminal device, and correspondingly, the terminal device receives the first message. The updated NSSRG information may include at least one piece of S-NSSAI and an NSSRG value corresponding to the S-NSSAI. The first requested slice does not share the same NSSRG based on the updated NSSRG information. In other words, an NSSRG value corresponding to the first requested slice varies based on a correspondence between the S-NSSAI indicated by the updated NSSRG information and the NSSRG value.

According to the communication method provided in this application, when the terminal device sends the first registration request message to the first network device, and the first requested slice included in the first registration request message does not share the same NSSRG based on the updated NSSRG information of the first network device, the first network device may send the first message to the terminal device, and the terminal device may enable, based on the first message, a subsequently requested slice to share a same NSSRG. This helps the slices requested by the terminal device share the same NSSRG.

With reference to the fourth aspect, in some implementations of the fourth aspect, before the first network device sends the first message to the terminal device, the method further includes: The first network device receives, over a first access, a first registration request message initiated by the terminal device, where the first registration request message includes a first requested slice; and the first network device receives, over a second access, a second registration request message initiated by the terminal device, where the second registration request message includes a second requested slice, and the second requested slice and the first requested slice do not share a same NSSRG. In a possible implementation, before the first network device receives the second registration request message over the second access, the terminal device is in a registered state or a registration attempt state on the first access.

With reference to the fourth aspect, in some implementations of the fourth aspect, the first message is sent over the first access or the second access.

With reference to the fourth aspect, in some implementations of the fourth aspect, before the first network device sends the first message to the terminal device, the method further includes: The first network device receives, over a first access, a first registration request message initiated by the terminal device, where the first registration request message includes a first requested slice; and the first network device obtains indication information indicating that the first requested slice and a second requested slice do not share a same NSSRG, where the second requested slice is a slice requested when the terminal device initiates a second registration request message to a second network device over a second access.

With reference to the fourth aspect, in some implementations of the fourth aspect, before the first network device sends the first message to the terminal device, the method further includes: The first network device receives a first session establishment request message from the terminal device over a first access, where the first session establishment request message includes a first requested slice; and the first network device obtains indication information indicating that the first requested slice and a second requested slice do not share a same NSSRG, where the second requested slice is a slice requested when the terminal device initiates a second session establishment request message to a second network device over a second access.

With reference to the fourth aspect, in some implementations of the fourth aspect, the first message is one of a registration reject message, a registration accept message, a deregistration message, a configuration update command message, a session establishment reject message, or a session release message. The registration reject message indicates that a registration request initiated by the terminal device is rejected; the registration accept message indicates that a registration request initiated by the terminal device is accepted; the deregistration message indicates the terminal device to perform deregistration; the configuration update command message is used to update a configuration of the terminal; the session establishment reject message is used to reject a session establishment request of the terminal device; and the session release message is used to release a session established by the terminal device.

With reference to the fourth aspect, in some implementations of the fourth aspect, if the first message is the deregistration message or the registration reject message, the first message further includes a registration reject cause value, and the registration reject cause value may be that no network slice is available.

With reference to the fourth aspect, in some implementations of the fourth aspect, the first message further includes a rejected slice that does not share an NSSRG.

According to a fifth aspect, a communication method is provided. The method includes: A first network device receives, over a first access, a first registration request message initiated by a terminal device, where the first registration request message includes a first requested slice, and the terminal device succeeds in registration over the first access; the first network device receives, over a second access, a second registration request message initiated by the terminal device, where the second registration request message includes a second requested slice; and if the second requested slice and the first requested slice do not share a same network slice simultaneous registration group NSSRG, the first network device sends re-registration indication information to the terminal device over the first access.

With reference to the fifth aspect, in some implementations of the fifth aspect, the method further includes: The first network device receives, over the first access, a third registration request message initiated by the terminal device, where the third registration request message includes a third requested slice, and the third requested slice and the second requested slice share a same NSSRG.

According to a sixth aspect, a communication method is provided. The method includes: A first network device receives, over a first access, a first registration request message initiated by a terminal device, where the first registration request message includes a first requested slice, the terminal device succeeds in registration over the first access, the first requested slice and a second requested slice do not share a same network slice simultaneous registration NSSRG, and the second requested slice is a slice requested when the terminal device initiates a second registration request message to a second network device; and the first network device sends re-registration indication information to the terminal device over the first access.

With reference to the sixth aspect, in some implementations of the sixth aspect, the method further includes: The first network device receives, over the first access, a third registration request message initiated by the terminal device, where the third registration request message includes a third requested slice, and the third requested slice and the second requested slice share a same NSSRG.

According to a seventh aspect, a communication method is provided. The method includes: A third network device sends a second message to a first network device, where the second message includes indication information indicating non-sharing of a same network slice simultaneous registration group NSSRG, and the indication information indicates that slices do not share a same NSSRG.

The third network device is a device different from the first network device and a second network device. For example, the third network device may be an HUDM.

With reference to the seventh aspect, in some implementations of the seventh aspect, before the third network device sends the second message to the first network device, the method further includes: The third network device receives a first allowed slice from the first network device; and the third network device receives a second requested slice from a second network device, where the first allowed slice and the second requested slice are from a same terminal, and the first allowed slice and the second requested slice do not share a same NSSRG.

The first allowed slice may include one or more pieces of S-NSSAI. This is not limited in this application. An allowed slice may be represented as allowed NSSAI. In a possible implementation, the allowed NSSAI includes allowed mapped NSSAI (mapped NSSAI), and the mapped NSSAI is HPLMN NSSAI. After a terminal device initiates a registration request to the first network device and successfully requests a slice, the first network device sends a registration accept message to the terminal device. The registration accept message may include a first allowed slice, and the first allowed slice indicates a slice that the first network device allows the terminal device to access. The first network device may notify the third network device of the first allowed slice. The terminal device initiates a registration request to the second network device, where the registration request may include a second requested slice, and the second network device may notify the third network device of the second requested slice. The first allowed slice and the second requested slice do not share a same NSSRG, and the third network device may send the second message to the first network device.

According to the communication method provided in this application, the first network device and the second network device may send slices to the third network device, and the third network device may send the second message to the first network device. This helps ensure that slices requested by a same terminal device over different accesses share a same NSSRG.

With reference to the seventh aspect, in some implementations of the seventh aspect, before the third network device sends the second message to the first network device, the method further includes: The third network device receives a second allowed slice from a second network device; and the third network device receives a first requested slice from the first network device, where the first requested slice and the second allowed slice are from a same terminal, and the second allowed slice and the first requested slice do not share a same NSSRG.

The second allowed slice may include one or more pieces of S-NSSAI. This is not limited in embodiments of this application. After a terminal device successfully initiates a registration request to the second network device and successfully requests a slice, the second network device sends a registration accept message to the terminal. The registration accept message may include a second allowed slice. The second network device may notify the third network device of the second allowed slice. The second allowed slice indicates a slice that the second network device allows the terminal device to access. The terminal device initiates a registration request to the first network device. The registration request may include the first requested slice. The first network device may notify the third network device of the first requested slice. The second allowed slice and the first requested slice do not share a same NSSRG, and the third network device may send the second message to the first network device.

According to the communication method provided in this application, the first network device and the second network device may send slices to the third network device. If the slices do not share a same NSSRG, the third network device may send the second message to the first network device. This helps ensure that slices requested by a same terminal device over different accesses share a same NSSRG.

With reference to the seventh aspect, in some implementations of the seventh aspect, before the third network device sends the second message to the first network device, the method further includes: The third network device receives a first requested slice from the first network device; and the third network device receives a second requested slice from a second network device, where the first requested slice and the second requested slice are from a same terminal, and the first requested slice and the second requested slice do not share a same NSSRG.

When a terminal device initiates a session establishment request to the first network device, the session establishment request may include a first requested slice, and the first network device may send the first requested slice to the third network device. In a possible implementation, the first requested slice sent by the first network device to the third network device includes HPLMN S-NSSAI. When the terminal device initiates a session establishment request to the second network device, the session establishment request may include a second requested slice, and the second network device may send the second requested slice to the third network device. In a possible implementation, the second requested slice sent by the second network device to the third network device includes HPLMN S-NSSAI. The third network device receives the first requested slice and the second requested slice, and may determine that the first requested slice and the second requested slice are from a same terminal and the first requested slice and the second requested slice do not share a same NSSRG, and the third network device may send a second message to the first network device or the second network device, where the second message indicates indication information indicating non-sharing of a same NSSRG, and the indication information further indicates that slices do not share a same NSSRG.

If the third network device sends the second message to the first network device, the first network device may send a first message to the terminal device based on the second message. If the third network device sends the second message to the second network device, the second network device may send a first message to the terminal device based on the second message. The first message may be a session establishment reject message or a session release message. This is not limited in embodiments of this application.

According to the communication method provided in this embodiment of this application, the first network device and the second network device may send, to the third network device, slices requested by the terminal device through session establishment requests. If the slices do not share a same NSSRG, the third network device may send a second message to the first network device or the second network device. This helps ensure that slices requested over different accesses share a same NSSRG.

With reference to the seventh aspect, in some implementations of the seventh aspect, before the third network device sends the second message to the first network device, the method further includes: The third network device receives a first NSSRG from the first network device; and the third network device receives a second NSSRG from a second network device, where the first NSSRG and the second NSSRG are from a same terminal, and the first NSSRG and the second NSSRG do not share a same value.

When a terminal device initiates a registration request to the first network device, a slice requested via the registration request shares a first NSSRG. When the terminal device initiates a registration request to the second network device, a slice requested via the registration request shares a second NSSRG. The third network device receives the first NSSRG and the second NSSRG, and if the first NSSRG and the second NSSRG do not share a same value, the third network device sends the second message to the first network device.

According to the communication method provided in this application, the first network device and the second network device may send shared NSSRGs to the third network device. If the NSSRGs do not share a same NSSRG, the third network device may send the second message to the first network device. This helps ensure that slices requested by a same terminal device over different accesses share a same NSSRG.

With reference to the seventh aspect, in some implementations of the seventh aspect, the second message further includes registration reject indication information. In a possible implementation, when the second message includes the registration reject indication information, the second message does not include the indication information indicating non-sharing of a same NSSRG.

With reference to the seventh aspect, in some implementations of the seventh aspect, the second message further includes a slice that does not share an NSSRG.

According to an eighth aspect, a communication method is provided. The method includes: A first network device receives a second message from a third network device, where the second message includes indication information indicating non-sharing of a same network slice simultaneous registration group NSSRG, and the indication information indicates that slices do not share a same NSSRG. The first network device sends a first message to a terminal device based on the indication information, where the first message includes indication information indicating non-sharing of an NSSRG, and the indication information indicating non-sharing of an NSSRG indicates that slices do not share a same NSSRG.

With reference to the eighth aspect, in some implementations of the eighth aspect, before the first network device receives the second message from the third network device, the method further includes: The first network device sends a first allowed slice to the third network device.

With reference to the eighth aspect, in some implementations of the eighth aspect, before the first network device receives the second message from the third network device, the method further includes: The first network device sends a first requested slice to the third network device.

With reference to the eighth aspect, in some implementations of the eighth aspect, before the first network device receives the second message from the third network device, the method further includes: The first network device sends a first NSSRG to the third network device.

According to a ninth aspect, a communication apparatus is provided. The apparatus includes a receiving unit. The receiving unit is configured to receive a first message from a first network device, where the first message includes indication information indicating non-sharing of a network slice simultaneous registration group NSSRG, and the indication information indicates that slices do not share a same NSSRG.

With reference to the ninth aspect, in some implementations of the ninth aspect, the apparatus further includes a sending unit. The sending unit is configured to initiate a first registration request message to the first network device over a first access, where the first registration request message includes a first requested slice; and initiate a second registration request message to the first network device over a second access, where the second registration request message includes a second requested slice, and the second requested slice and the first requested slice do not share a same NSSRG.

With reference to the ninth aspect, in some implementations of the ninth aspect, the first message is received over the first access or the second access.

With reference to the ninth aspect, in some implementations of the ninth aspect, the sending unit is further configured to initiate a first registration request message to the first network device over a first access, where the first registration request message includes a first requested slice; and initiate a second registration request message to a second network device over a second access, where the second registration request message includes a second requested slice, and the second requested slice and the first requested slice do not share a same NSSRG.

With reference to the ninth aspect, in some implementations of the ninth aspect, the sending unit is configured to initiate a first session establishment request message to the first network device over a first access, where the first session establishment request message includes a first requested slice; and initiate a second session establishment request message to a second network device over a second access, where the second session establishment request message includes a second requested slice, and the second requested slice and the first requested slice do not share a same NSSRG.

With reference to the ninth aspect, in some implementations of the ninth aspect, the first message is one of a registration reject message, a registration accept message, a deregistration message, a configuration update command message, a session establishment reject message, or a session release message. The registration reject message indicates that an initiated registration request is rejected; the registration accept message indicates that an initiated registration request is accepted; the deregistration message indicates to perform deregistration; the configuration update command message is used to update a configuration; the session establishment reject message is used to reject a session establishment request of a terminal device; and the session release message is used to release a session established by the terminal device.

With reference to the ninth aspect, in some implementations of the ninth aspect, if the first message is the deregistration message or the registration reject message, the first message further includes a registration reject cause value, and the registration reject cause value may be that no network slice is available.

With reference to the ninth aspect, in some implementations of the ninth aspect, the first message further includes a slice that does not share an NSSRG.

According to a tenth aspect, a communication apparatus is provided. The apparatus includes a sending unit and a processing unit. The sending unit is configured to initiate a first registration request message to a first network device over a first access; and initiate a second registration request message to a second network device over a second access. A sequence of initiating the first registration request message to the first network device over the first access and initiating the second registration request message to the second network device over the second access is not limited. The processing unit is configured to establish a protocol data unit PDU session over the second access; and the sending unit is further configured to initiate a third registration request message to the first network device over the second access, where the third registration request message includes a third requested slice, and if a slice associated with the PDU session and an allowed slice of the first access do not share a same network slice simultaneous registration group NSSRG, the third registration request message does not include the slice associated with the PDU session.

With reference to the tenth aspect, in some implementations of the tenth aspect, the processing unit is further configured to release the PDU session.

With reference to the tenth aspect, in some implementations of the tenth aspect, the first registration request includes a first requested slice, and that the slice associated with the PDU session and the allowed slice of the first access do not share the same network slice simultaneous registration group NSSRG includes: The slice associated with the PDU session and the first requested slice do not share the same network slice simultaneous registration group NSSRG.

With reference to the tenth aspect, in some implementations of the tenth aspect, the second registration request includes a second requested slice.

According to an eleventh aspect, a communication apparatus is provided. The apparatus includes a sending unit and a receiving unit. The sending unit is configured to initiate a first registration request message to a first network device over a first access, where the first registration request message includes a first requested slice; and initiates a second registration request message to the first network device or a second network device over a second access, where the second registration request message includes a second requested slice, and the second requested slice and the first requested slice do not share a same network slice simultaneous registration group NSSRG; and the receiving unit is configured to receive re-registration indication information from the first network device over the first access.

With reference to the eleventh aspect, in some implementations of the eleventh aspect, the sending unit is further configured to initiate a third registration message to the first network device based on the re-registration indication information, where the third registration message includes a third requested slice, and the third requested slice and the second requested slice share a same NSSRG.

According to a twelfth aspect, a communication apparatus is provided. The apparatus includes a sending unit. The sending unit is configured to send a first message to a terminal device, where the first message includes indication information indicating non-sharing of a network slice simultaneous registration group NSSRG, and the indication information indicates that slices do not share a same NSSRG.

With reference to the twelfth aspect, in some implementations of the twelfth aspect, the apparatus further includes a receiving unit and a processing unit. The receiving unit is configured to receive a first registration request message from the terminal device, where the first registration request message includes a first requested slice; the processing unit is configured to update NSSRG information, to obtain updated NSSRG information; and the sending unit is further configured to send the first message to the terminal device if the first requested slice does not share a same NSSRG based on the updated NSSRG information.

With reference to the twelfth aspect, in some implementations of the twelfth aspect, the receiving unit is further configured to receive, over a first access, a first registration request message initiated by the terminal device, where the first registration request message includes a first requested slice; and receive, over a second access, a second registration request message initiated by the terminal device, where the second registration request message includes a second requested slice, and the second requested slice and the first requested slice do not share a same NSSRG.

With reference to the twelfth aspect, in some implementations of the twelfth aspect, the first message is sent over the first access or the second access.

With reference to the twelfth aspect, in some implementations of the twelfth aspect, the receiving unit is further configured to receive, over a first access, a first registration request message initiated by the terminal device, where the first registration request message includes a first requested slice; and the first requested slice and a second requested slice do not share a same NSSRG, where the second requested slice is a slice requested when the terminal device initiates a second registration request message to a second network device over a second access.

With reference to the twelfth aspect, in some implementations of the twelfth aspect, the receiving unit is configured to receive a first session establishment request message from the terminal device over a first access, where the first session establishment request message includes a first requested slice, the first requested slice and a second requested slice do not share a same NSSRG, and the second requested slice is a slice requested when the terminal device initiates a second session establishment request message to a second network device over a second access.

With reference to the twelfth aspect, in some implementations of the twelfth aspect, the first message is one of a registration reject message, a registration accept message, a deregistration message, a configuration update command message, a session establishment reject message, or a session release message. The registration reject message indicates that a registration request initiated by the terminal device is rejected; the registration accept message indicates that a registration request initiated by the terminal device is accepted; the deregistration message indicates the terminal device to perform deregistration; the configuration update command message is used to update a configuration of the terminal; the session establishment reject message is used to reject a session establishment request of the terminal device; and the session release message is used to release a session established by the terminal device.

With reference to the twelfth aspect, in some implementations of the twelfth aspect, if the first message is the deregistration message or the registration reject message, the first message further includes a registration reject cause value, and the registration reject cause value may be that no network slice is available.

With reference to the twelfth aspect, in some implementations of the twelfth aspect, the first message further includes a rejected slice that does not share an NSSRG.

According to a thirteenth aspect, a communication apparatus is provided. The apparatus includes a receiving unit. The receiving unit is configured to receive, over a first access, a first registration request message initiated by a terminal device, where the first registration request message includes a first requested slice; receive, over a second access, a second registration request message initiated by the terminal device, where the second registration request message includes a second requested slice; and if the second requested slice and the first requested slice do not share a same network slice simultaneous registration group NSSRG, send re-registration indication information to the terminal device over the first access.

With reference to the thirteenth aspect, in some implementations of the thirteenth aspect, the receiving unit is configured to receive, over the first access, a third registration request message initiated by the terminal device, where the third registration request message includes a third requested slice, and the third requested slice and the second requested slice share a same NSSRG.

According to a fourteenth aspect, a communication apparatus is provided. The apparatus includes: a unit for receiving, over a first access, a first registration request message initiated by a terminal device, where the first registration request message includes a first requested slice, the first requested slice and a second requested slice do not share a same network slice simultaneous registration NSSRG, and the second requested slice is a slice requested when the terminal device initiates a second registration request message to a second network device; and sending re-registration indication information to the terminal device over the first access.

With reference to the fourteenth aspect, in some implementations of the fourteenth aspect, the receiving unit is configured to receive, over the first access, a third registration request message initiated by the terminal device, where the third registration request message includes a third requested slice, and the third requested slice and the second requested slice share a same NSSRG.

According to a fifteenth aspect, a communication apparatus is provided. The apparatus includes a sending unit. The sending unit is configured to send a second message to a first network device, where the second message includes indication information indicating non-sharing of a same network slice simultaneous registration group NSSRG, and the indication information indicates that slices do not share a same NSSRG.

With reference to the fifteenth aspect, in some implementations of the fifteenth aspect, the apparatus further includes a receiving unit. The receiving unit is further configured to receive a first allowed slice from the first network device; and receive a second requested slice from a second network device, where the first allowed slice and the second requested slice are from a same terminal, and the first allowed slice and the second requested slice do not share a same NSSRG.

With reference to the fifteenth aspect, in some implementations of the fifteenth aspect, the receiving unit is further configured to receive a second allowed slice from a second network device; and receive a first requested slice from the first network device, where the first requested slice and the second allowed slice are from a same terminal, and the second allowed slice and the first requested slice do not share a same NSSRG.

With reference to the fifteenth aspect, in some implementations of the fifteenth aspect, the receiving unit is configured to receive a first requested slice from the first network device; and receive a second requested slice from a second network device, where the first requested slice and the second requested slice are from a same terminal, and the first requested slice and the second requested slice do not share a same NSSRG.

With reference to the fifteenth aspect, in some implementations of the fifteenth aspect, the receiving unit is further configured to receive a first NSSRG from the first network device; and receive a second NSSRG from the first network device, where the first NSSRG and the second NSSRG are from a same terminal, and the first NSSRG and the second NSSRG do not share a same value.

With reference to the fifteenth aspect, in some implementations of the fifteenth aspect, the second message further includes registration reject indication information.

With reference to the fifteenth aspect, in some implementations of the fifteenth aspect, the second message further includes a slice that does not share an NSSRG.

According to a sixteenth aspect, a communication apparatus is provided. The apparatus includes a receiving unit and a sending unit. The receiving unit is configured to receive a second message from a third network device, where the second message includes indication information indicating non-sharing of a same network slice simultaneous registration group NSSRG, and the indication information indicates that slices do not share a same NSSRG; and the sending unit is configured to send a first message to a terminal device based on the indication information, where the first message includes indication information indicating non-sharing of an NSSRG, and the indication information indicating non-sharing of an NSSRG indicates that slices do not share a same NSSRG.

With reference to the sixteenth aspect, in some implementations of the sixteenth aspect, the sending unit is further configured to send a first allowed slice to the third network device.

With reference to the sixteenth aspect, in some implementations of the sixteenth aspect, the sending unit is further configured to send a second requested slice to the third network device.

With reference to the sixteenth aspect, in some implementations of the sixteenth aspect, the sending unit is further configured to send a first NSSRG to the third network device.

According to a seventeenth aspect, a communication apparatus is provided, including a processor and a memory. The memory is configured to store a computer program, and the processor is configured to: invoke the computer program from the memory, and run the computer program, to enable the apparatus to perform the method according to any possible implementation of any one of the foregoing aspects.

Optionally, there are one or more processors, and there are one or more memories.

Optionally, the memory may be integrated with the processor, or the memory and the processor are separately disposed.

Optionally, the communication apparatus further includes a transmitting machine (transmitter) and a receiving machine (receiver). The transmitting machine and the receiving machine may be separately disposed, or may be integrated together, and are referred to as a transceiver machine (transceiver).

According to an eighteenth aspect, a communication system is provided, including a transmitter, a receiver, and a processor. The transmitter is configured to send a signal to another apparatus, the receiver is configured to receive a signal from the another apparatus, the processor is coupled to a memory, the memory is configured to store a computer program, and when the processor invokes the computer program, the communication apparatus is enabled to perform the method according to any possible implementation of any one of the foregoing aspects.

According to a nineteenth aspect, a chip system is provided, including a processor. The processor is configured to invoke a computer program from a memory and run the computer program, to enable a communication device on which the chip system is installed to perform the method according to any possible implementation of any one of the foregoing aspects.

According to a twentieth aspect, a computer-readable storage medium is provided. The computer-readable storage medium stores a computer program (which may also be referred to as code or instructions). When the computer program is run on a computer, the computer performs the method according to any possible implementation of any one of the foregoing aspects.

According to a twenty-first aspect, a computer program product is provided. The computer program product includes a computer program (which may also be referred to as code or instructions), and when the computer program is run, a computer is enabled to perform the method according to any possible implementation of any one of the foregoing aspects.

### BRIEF DESCRIPTION OF DRAWINGS

FIG. 1 is a diagram of a communication system to which an embodiment of this application is applicable;
FIG. 2 is a schematic flowchart of a communication method according to an embodiment of this application;
FIG. 3 is a schematic flowchart of another communication method according to an embodiment of this application;
FIG. 4 is a schematic flowchart of still another communication method according to an embodiment of this application;
FIG. 5 is a schematic flowchart of another communication method according to an embodiment of this application;
FIG. 6 is a schematic flowchart of still another communication method according to an embodiment of this application;
FIG. 7 is a schematic flowchart of another communication method according to an embodiment of this application;
FIG. 8 is a schematic flowchart of still another communication method according to an embodiment of this application;
FIG. 9 is a schematic flowchart of another communication method according to an embodiment of this application;
FIG. 10 is a schematic flowchart of still another communication method according to an embodiment of this application;
FIG. 11 is a schematic flowchart of another communication method according to an embodiment of this application;
FIG. 12 is a schematic flowchart of still another communication method according to an embodiment of this application;
FIG. 13 is a schematic flowchart of another communication method according to an embodiment of this application;
FIG. 14 is a schematic flowchart of still another communication method according to an embodiment of this application;
FIG. 15 is a schematic flowchart of another communication method according to an embodiment of this application;
FIG. 16 is a schematic flowchart of still another communication method according to an embodiment of this application;
FIG. 17 is a schematic flowchart of another communication method according to an embodiment of this application;
FIG. 18 is a schematic flowchart of still another communication method according to an embodiment of this application;
FIG. 19 is a schematic flowchart of another communication method according to an embodiment of this application;
FIG. 20 is a schematic flowchart of still another communication method according to an embodiment of this application;
FIG. 21 is a schematic flowchart of another communication method according to an embodiment of this application;
FIG. 22 is a schematic flowchart of still another communication method according to an embodiment of this application;
FIG. 23 is a schematic flowchart of another communication method according to an embodiment of this application;
FIG. 24 is a schematic flowchart of still another communication method according to an embodiment of this application;
FIG. 25 is a schematic flowchart of another communication method according to an embodiment of this application;
FIG. 26 is a schematic flowchart of still another communication method according to an embodiment of this application;
FIG. 27 is a schematic flowchart of another communication method according to an embodiment of this application;
FIG. 28 is a schematic flowchart of still another communication method according to an embodiment of this application;
FIG. 29 is a schematic flowchart of another communication method according to an embodiment of this application;
FIG. 30 is a schematic flowchart of still another communication method according to an embodiment of this application;
FIG. 31 is a schematic flowchart of another communication method according to an embodiment of this application;
FIG. 32 is a block diagram of a communication apparatus according to an embodiment of this application; and
FIG. 33 is a block diagram of another communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a wireless local area network (wireless local area network, WLAN) communication system, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system or a new radio (new radio, NR) system, a worldwide interoperability for microwave access (worldwide interoperability for microwave access, WiMAX) communication system, and another evolved communication system. The 5G system usually includes the following three major application scenarios: enhanced mobile broadband (enhanced mobile broadband, eMBB), ultra-reliable and low-latency communication (ultra-reliable and low-latency communication, URLLC), and massive machine type of communication (massive machine type of communication, mMTC), and also includes various future communication systems.

The terminal device in embodiments of this application may also be referred to as user equipment (UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user device, or the like.

The terminal device may be a device that provides voice/data connectivity for a user, for example, a handheld device or a vehicle-mounted device that has a wireless connection function. Currently, some examples of the terminal are a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, an uncrewed aerial vehicle, a terminal device in a 5G network, a terminal device in a future evolved public land mobile network (public land mobile network, PLMN), and the like. This is not limited in embodiments of this application.

In addition, in embodiments of this application, the terminal device may alternatively be a terminal device in an internet of things (internet of things, IoT) system. An IoT is an important part of future development of information technologies, and a main technical feature of the IoT is to connect things to a network by using a communication technology, to implement an intelligent network for interconnection between a person and a machine or between things.

In addition, a network device in embodiments of this application may be a device configured to communicate with the terminal device. The network device may also be referred to as an access network device or a radio access network device, may be a transmission reception point (transmission reception point, TRP), or may be an evolved NodeB (evolved NodeB, eNB, or eNodeB) in an LTE system, or may be a home NodeB (for example, a home evolved NodeB, or a home NodeB, HNB), a baseband unit (baseband unit, BBU), or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like, may be an access point (access point, AP) in a WLAN, may be a gNB in a new radio (new radio, NR) system, may be a satellite base station in a satellite communication system, or may be a device that bears a base station function and that has various forms, or the like. This is not limited in embodiments of this application.

In a network structure, the network device may include a central unit (central unit, CU) node or a distributed unit (distributed unit, DU) node, a RAN device including a CU node and a DU node, or a RAN device including a control plane CU node (CU-CP node), a user plane CU node (CU-UP node), and a DU node.

The network device provides a service for a cell, and a terminal device communicates with the cell through a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a high-rate data transmission service.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry instructions and/or data.

When the terminal device accesses a network, it may be restricted that requested slices need to share a same NSSRG. In an NSSRG technology, S-NSSAI included in each piece of configured network slice selection assistance information (configured NSSAI) is associated with one or more NSSRG values (values). If NSSRG values associated with two pieces of S-NSSAI have a same value, it may be referred to as that the two pieces of S-NSSAI share a same NSSRG. For example, in a multi-network access scenario, slices requested by the terminal device when the terminal device accesses a network over a 3rd generation partnership project (3rd generation partnership project, 3GPP) access and a non-3GPP (non-3GPP) access may share a same NSSRG; or slices requested by the terminal device when the terminal device accesses different networks over a 3GPP access or a non-3GPP access may share a same NSSRG.

If the terminal device accesses a network without meeting the foregoing restriction, the terminal device may perform processing based on a communication method provided in embodiments of this application.

To better understand embodiments of this application, a scenario to which embodiments of this application are applicable is first described.

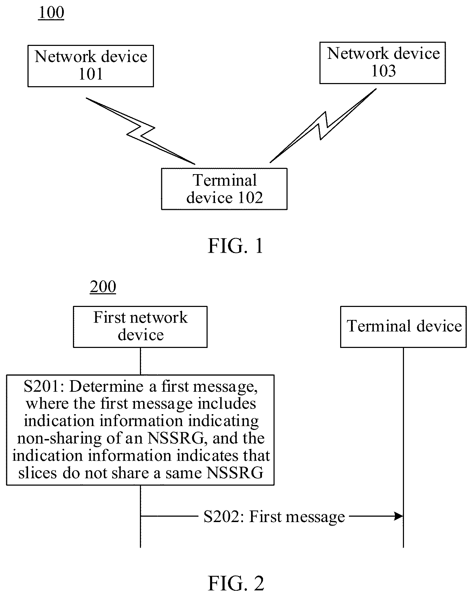

For example, FIG. 1 is a diagram of a communication system 100 to which an embodiment of this application is applicable. As shown in FIG. 1, the communication system 100 includes a network device 101, a terminal device 102, and a network device 103. Both the network device 101 and the network device 103 may be devices for providing networks to the terminal device 102, for example, access and mobility management functions (access and mobility management functions, AMFs).

The terminal device 102 may access both the network device 101 and the network device 103, or may access only the network device 101 or the network device 103. When the terminal device 102 accesses the network device 101 and the network device 103, requested slices need to share a same NSSRG. If the requested slices do not share the same NSSRG, the terminal device 102 may perform processing based on the communication method provided in embodiments of this application.

When the terminal device 102 accesses only the network device 101 or the network device 103, if an NSSRG of a slice requested by the terminal device 102 and an NSSRG allowed by the network device 101 or the network device 103 do not share a same value, the terminal device 102 may perform processing based on the communication method provided in embodiments of this application.

It may be understood that the communication method provided in embodiments of this application may be applicable to a multi-network access scenario (for example, the terminal device 102 accesses both the network device 101 and the network device 103) or a single-network access scenario (for example, the terminal device 102 accesses the network device 101 or the network device 103).

To clearly describe the technical solutions in embodiments of this application, terms such as "first" and "second" are used in embodiments of this application to distinguish between same items or similar items that have basically the same functions and purposes. For example, a first NSSRG and a second NSSRG are used to distinguish between different NSSRGs, and do not limit a sequence thereof. A person skilled in the art may understand that the terms such as "first" and "second" do not limit a quantity or an execution sequence, and the terms such as "first" and "second" do not indicate a definite difference.

It should be noted that in this application, the word such as "example" or "for example" represents giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a relative concept in a specific manner.

In addition, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may represent a, or b, or c, or a and b, or a and c, or b and c, or a, b, and c, where a, b, and c may be single, or may be plural.

FIG. 2 is a schematic flowchart of a communication method 200 according to an embodiment of this application. The method 200 may be applied to the communication system 100 in FIG. 1, but this embodiment of this application is not limited thereto. As shown in FIG. 2, the method 200 may include the following steps.

S201: A first network device determines a first message, where the first message includes indication information indicating non-sharing of an NSSRG, and the indication information indicates that slices do not share a same NSSRG.

In the communication system 100 shown in FIG. 1, the first network device may be the network device 101 or the network device 103. For example, the first network device may be an AMF.

If the first network device determines that slices requested by a terminal device do not share an NSSRG, the first network device may generate a first message. The first message includes indication information indicating non-sharing of an NSSRG, and the indication information indicates that slices do not share a same NSSRG. The indication information indicating non-sharing of an NSSRG may alternatively be a slice rejection cause value for not sharing an NSSRG.

S202: The first network device sends the first message to the terminal device, and correspondingly, the terminal device receives the first message.

The first network device may send the first message to the terminal device, where the first message includes the indication information indicating non-sharing of an NSSRG, and correspondingly, the terminal device receives the first message, and may enable, based on the first message, a requested slice to share a same NSSRG when requesting to register with the first network device.

According to the communication method provided in this embodiment of this application, if slices requested by the terminal device do not share a same NSSRG, the terminal device may receive a first message sent by a network device, and the terminal device may enable, based on the first message, a subsequently requested slice to share a same NSSRG. This helps the slices requested by the terminal device share the same NSSRG.

In an optional embodiment, before the first network device sends the first message to the terminal device, the method 200 may further include: The terminal device sends a first registration request message to the first network device, and correspondingly, the first network device receives the first registration request message, where the first registration request message includes a first requested slice; and the first network device updates NSSRG information, to obtain updated NSSRG information. That the first network device sends the first message to the terminal device in S202 includes: If the first requested slice does not share a same NSSRG based on the updated NSSRG information, the first network device sends the first message to the terminal device, and correspondingly, the terminal device receives the first message.

Time at which the terminal device sends the first registration request to the first network device is close to time at which the first network device updates the NSSRG information, and the first network device has not sent the updated NSSRG information to the terminal device. In this case, if the first requested slice does not share the same NSSRG based on the updated NSSRG information, the first network device sends the first message to the terminal device, and correspondingly, the terminal device receives the first message. The updated NSSRG information may include at least one piece of S-NSSAI and an NSSRG value corresponding to the S-NSSAI. The first requested slice does not share the same NSSRG based on the updated NSSRG information. In other words, an NSSRG value corresponding to the first requested slice varies based on a correspondence between the S-NSSAI indicated by the updated NSSRG information and the NSSRG value.

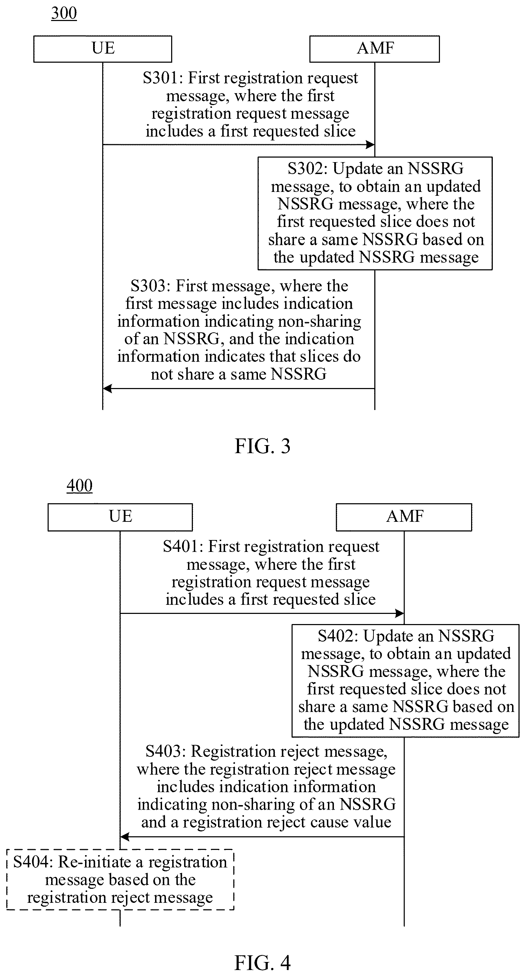

For example, a terminal device may be user equipment (user equipment, UE), and a first network device may be an AMF. FIG. 3 is a schematic flowchart of a communication method 300. As shown in FIG. 3, the method 300 may include the following steps.

S301: The UE sends a first registration request message to the AMF, and correspondingly, the AMF receives the first registration request message, where the first registration request message includes a first requested slice.

S302: The AMF updates NSSRG information, to obtain updated NSSRG information, where the first requested slice does not share a same NSSRG based on the updated NSSRG information.

S303: If the first requested slice does not share the same NSSRG based on the updated NSSRG information, the AMF sends a first message to the UE, and correspondingly, the UE receives the first message, where the first message includes indication information indicating non-sharing of an NSSRG, and the indication information indicates that slices do not share a same NSSRG.

According to the communication method provided in this embodiment of this application, when the terminal device sends the first registration request message to the first network device, and the first requested slice included in the first registration request message does not share the same NSSRG based on the updated NSSRG information of the first network device, the first network device may send the first message to the terminal device, and the terminal device may enable, based on the first message, a subsequently requested slice to share a same NSSRG. This helps the slices requested by the terminal device share the same NSSRG.

In an optional embodiment, the first message in the method 200 may be one of a registration reject message, a registration accept message, a deregistration message, or a configuration update command message. The registration reject message indicates that a registration request initiated by the terminal device is rejected; the registration accept message indicates that a registration request initiated by the terminal device is accepted; the deregistration message indicates the terminal device to perform deregistration; and the configuration update command message is used to update a configuration of the terminal device.

If the first message is the registration reject message, and the registration reject message indicates that the registration request initiated by the terminal device is rejected, the terminal device may re-initiate a registration request to the first network device based on the first message.

If the first message is the registration accept message, and the registration accept message indicates that the registration request initiated by the terminal device is accepted, the terminal device may determine, based on the first message, that the registration request is accepted.

If the first message is the deregistration message, and the deregistration message indicates the terminal device to perform deregistration, the terminal device may perform re-registration based on the first message.

If the first message is the configuration update command message, and the configuration update command message is used to update the configuration of the terminal device, the terminal device may update the configuration based on the first message.

According to the communication method provided in this embodiment of this application, if slices do not share a same NSSRG, the terminal device may receive one of the registration reject message, the registration accept message, the deregistration message, or the configuration update command message, so that a slice subsequently requested by the terminal device share a same NSSRG. This helps the slices requested by the terminal device share the same NSSRG.

Optionally, if the first message is the deregistration message or the registration reject message, the first message further includes a registration reject cause value, and the registration reject cause value may be that no network slice is available (No network slices available).

If the first message is the registration reject message, the first message further includes the registration reject cause value, and the registration reject cause value may be that no network slice is available, so that the terminal device determines a registration reject cause based on the first message, and a slice subsequently requested by the terminal device shares a same NSSRG. This helps the slices requested by the terminal device share the same NSSRG.

In the method 300 shown in FIG. 3, if the first message may be the registration reject message, the first message further includes the registration reject cause value, and the registration reject cause value may be that no network slice is available.

For example, FIG. 4 is a schematic flowchart of a communication method 400. As shown in FIG. 4, the method 400 may include the following steps.

S401: UE sends a first registration request message to an AMF, and correspondingly, the AMF receives the first registration request message, where the first registration request message includes a first requested slice.

S402: The AMF updates NSSRG information, to obtain updated NSSRG information, where the first requested slice does not share a same NSSRG based on the updated NSSRG information.

S403: If the first requested slice does not share the same NSSRG based on the updated NSSRG information, the AMF sends a registration reject message to the UE, and correspondingly, the UE receives the registration reject message, where the registration reject message includes indication information indicating non-sharing of an NSSRG and a registration reject cause value, the indication information indicates that slices do not share a same NSSRG, and the registration reject cause value may be that no network slice is available.

If the first requested slice does not share the same NSSRG based on the updated NSSRG information, the AMF may reject all slices in a registration request message sent by the UE.

S404: The UE may re-initiate a registration request based on the registration reject message.

Re-initiating the registration request in S404 is optional. After receiving the registration reject message, the UE may re-initiate the registration request for rejected slices. The UE may determine a rejection cause based on the registration reject message, so that slices requested via the re-initiated registration request share a same NSSRG based on the updated NSSRG information.

According to the method provided in this embodiment of this application, when the UE sends the first registration request message to the AMF, and the first requested slice included in the first registration request message does not share the same NSSRG based on the updated NSSRG information, the AMF may send the registration reject message to the UE and reject the first registration request message. This helps a slice subsequently requested by the UE share a same NSSRG.

Optionally, the first message further includes a slice that does not share an NSSRG.

The first message may include the indication information indicating non-sharing of an NSSRG and the slice that does not share the NSSRG. Three different formats are provided in this embodiment of this application.

In a first format, only the indication information indicating non-sharing of an NSSRG is carried. This indicates that all slices included in the first requested slice do not share a same NSSRG.

In a second format, all slices that do not share an NSSRG carry only one indication indicating non-sharing of an NSSRG. For example, a slice 1 (slice 1), a slice 2 (slice 2), and a slice 3 (slice 3) do not share an NSSRG, and it indicates that the slice 1, the slice 2, and the slice 3 do not share a same NSSRG.

In a third format, each slice that does not share an NSSRG carries one indication indicating non-sharing of an NSSRG. For example, a slice 1 does not share an NSSRG, a slice 2 does not share the NSSRG, and a slice 3 does not share the NSSRG, and it indicates that the slice 1, the slice 2, and the slice 3 do not share a same NSSRG.

The first message is any one of the registration reject message, the registration accept message, the deregistration message, or the configuration update command message, and the first message may include the slice that does not share the NSSRG.

The first message further includes the slice that does not share the NSSRG, so that the terminal device determines, based on the first message, the slice that does not share the NSSRG in the requested slices.

In the method 300 shown in FIG. 3, if the first message may be the registration accept message, the registration accept message may include indication information indicating non-sharing of an NSSRG and a slice that does not share an NSSRG, and the indication information indicates that slices do not share a same NSSRG.

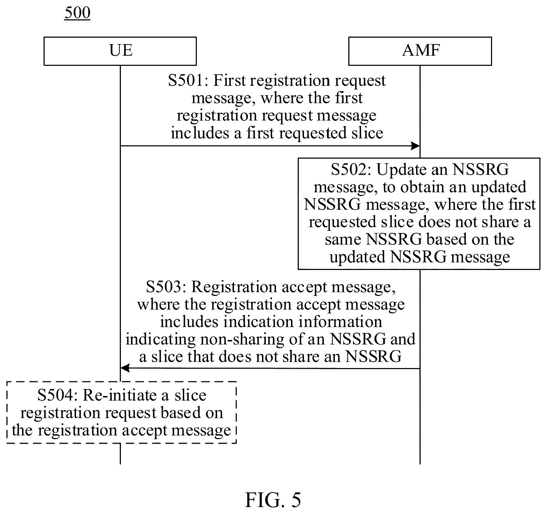

For example, FIG. 5 is a schematic flowchart of a communication method 500. As shown in FIG. 5, the method 500 may include the following steps.

S501: UE sends a first registration request message to an AMF, and correspondingly, the AMF receives the first registration request message, where the first registration request message includes a first requested slice.

S502: The AMF updates NSSRG information, to obtain updated NSSRG information, where the first requested slice does not share a same NSSRG based on the updated NSSRG information.

S503: If the first requested slice does not share the same NSSRG based on the updated NSSRG information, the AMF sends a registration accept message to the UE, and correspondingly, the UE receives the registration accept message, where the registration accept message includes indication information indicating non-sharing of an NSSRG and a slice that does not share an NSSRG, and the indication information indicates that slices do not share a same NSSRG.

If slices in a registration request message sent by the UE are slices that do not share a same NSSRG based on the updated NSSRG information, the AMF may send a registration accept message to the UE. The registration accept message includes an allowed slice and a rejected slice. The allowed slice shares a same NSSRG based on the updated NSSRG information, and the rejected slice is a slice that does not share the same NSSRG based on the updated NSSRG information. The UE receives the registration accept message, and may determine a rejection cause and the rejected slice.

S504: The UE adds, based on the registration accept message, the slice that does not share the NSSRG to a rejected slice list that does not share an NSSRG. If the UE considers that the allowed slice carried in the registration accept message does not meet a requirement, the UE may re-initiate a slice registration request. Slices in the registration request re-initiated by the UE share a same NSSRG based on the updated NSSRG information.

S504 is optional. The UE may re-initiate the slice registration request, or may not respond. This is not limited in this embodiment of this application.

According to the method provided in this embodiment of this application, when the UE sends the first registration request message to the AMF, and the first requested slice included in the first registration request message does not share the same NSSRG based on the updated NSSRG information of the AMF, the AMF may send the registration accept message to the UE and receive a slice that shares an NSSRG and reject a slice that does not share the NSSRG. This helps a slice subsequently requested by the UE share a same NSSRG.

In the method 300 shown in FIG. 3, if the first message may be the configuration update command message, the configuration update command message may include indication information indicating non-sharing of an NSSRG and a slice that does not share an NSSRG, and the indication information indicates that slices do not share a same NSSRG.

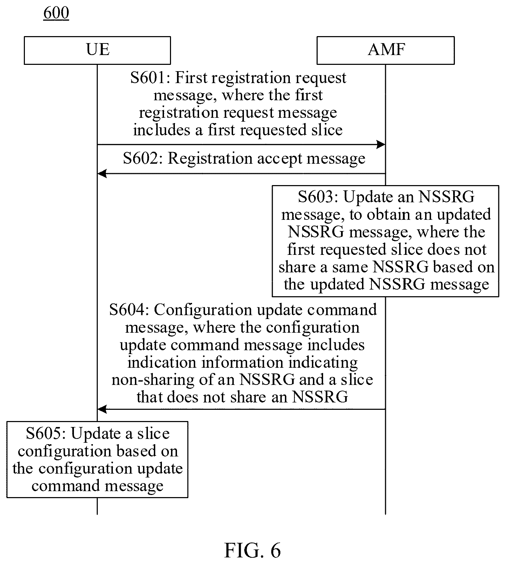

For example, FIG. 6 is a schematic flowchart of a communication method 600. As shown in FIG. 6, the method 600 may include the following steps.

S601: UE sends a first registration request message to an AMF, and correspondingly, the AMF receives the first registration request message, where the first registration request message includes a first requested slice.

S602: The AMF sends a registration accept message to the UE based on the first registration request message.

The UE sends the first registration request message to the AMF, and then receives the registration accept message from the AMF. In other words, the UE is in a registered state in a network covered by the AMF.

S603: The AMF updates NSSRG information, to obtain updated NSSRG information.

S604: If the first requested slice does not share a same NSSRG based on the updated NSSRG information, the AMF sends a configuration update command message to the UE, and correspondingly, the UE receives the configuration update command message, where the configuration update command message includes indication information indicating non-sharing of an NSSRG and a slice that does not share an NSSRG, and the indication information indicates that slices do not share a same NSSRG.

S605: The UE updates a slice configuration based on the configuration update command message.

According to the method provided in this embodiment of this application, when the UE sends the first registration request message to the AMF, and the first requested slice included in the first registration request message does not share the same NSSRG based on the updated NSSRG information of the AMF, the AMF may send the configuration update command message to the UE. This helps a slice subsequently requested by the UE share a same NSSRG.

If the first message is the deregistration message, the first message further includes the registration reject cause value, and the registration reject cause value may be that no network slice is available, so that the terminal device determines a deregistration cause based on the first message, and a slice subsequently requested by the terminal device shares a same NSSRG. This helps the slices requested by the terminal device share the same NSSRG.

In the method 300 shown in FIG. 3, if the first message may be the deregistration message, the first message further includes the registration reject cause value, and the registration reject cause value may be that no network slice is available.

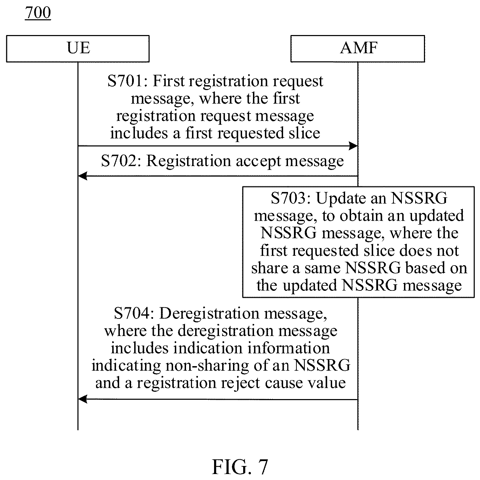

For example, FIG. 7 is a schematic flowchart of a communication method 700. As shown in FIG. 7, the method 700 may include the following steps.

S701: UE sends a first registration request message to an AMF, and correspondingly, the AMF receives the first registration request message, where the first registration request message includes a first requested slice.

S702: The AMF sends a registration accept message to the UE based on the first registration request message.

The UE sends the first registration request message to the AMF, and then receives the registration accept message from the AMF. In other words, the UE is in a registered state in a network covered by the AMF.

S703: The AMF updates NSSRG information, to obtain updated NSSRG information, where the first requested slice does not share a same NSSRG based on the updated NSSRG information.

S704: If the first requested slice does not share the same NSSRG based on the updated NSSRG information, the AMF sends a deregistration message to the UE, and correspondingly, the UE receives the deregistration message, where the deregistration message includes indication information indicating non-sharing of an NSSRG and a registration reject cause value, the indication information indicates that slices do not share a same NSSRG, and the registration reject cause value may be that no network slice is available.

If the first requested slice does not share the same NSSRG based on the updated NSSRG information, the AMF may reject registration of the UE.

According to the method provided in this embodiment of this application, the UE is in the registered state in the network covered by the AMF. If the first requested slice included in the first registration request message does not share the same NSSRG based on the updated NSSRG information, the AMF may send the deregistration message to the UE and reject registration of the UE. This helps a slice subsequently requested by the UE share a same NSSRG.

In an optional embodiment, before the first network device sends the first message to the terminal device, the method 200 may further include: The terminal device initiates a first registration request message to the first network device over a first access, and correspondingly, the first network device receives the first registration request message, where the first registration request message includes a first requested slice; and the terminal device initiates a second registration request message to the first network device over a second access, and correspondingly, the first network device receives the second registration request message, where the second registration request message includes a second requested slice, and the second requested slice and the first requested slice do not share a same NSSRG. Before the terminal device initiates the second registration request message to the first network device over the second access, the terminal device may be in a registered state or a registration attempt state on the first access. The first access and the second access each are any one of a 3GPP access type and a non-3GPP access type.

The terminal device may initiate registration requests to a same network device over different accesses. The terminal device initiates the first registration request message to the first network device over the first access, and initiates the second registration request message to the first network device over the second access. If the first requested slice included in the first registration request message and the second requested slice included in the second registration request message do not share the same NSSRG, the first network device may send the first message to the terminal device.

The first message may act on the first access or may act on the second access. This is not limited this embodiment of this application. If the first message acts on the first access, the first message is sent over the first access; or if the first message acts on the second access, the first message is sent over the second access.

According to the communication method provided in this embodiment of this application, if slices requested by the terminal device from a same network device over different accesses do not share a same NSSRG, the network device may send a first message to the terminal device, and the terminal device may enable, based on the first message, a subsequently requested slice to share a same NSSRG. This helps the slices requested by the terminal device share the same NSSRG.

Optionally, the terminal device may receive the first message from the first network device over the first access, or the terminal device may receive the first message from the first network device over the second access.

If the terminal device receives the first message from the first network device over the first access, in a possible implementation, if the first message is a registration reject message or a deregistration message, it may indicate that the first network device rejects the first access of the terminal device, and the terminal device may re-send a registration request message to the first network device over the first access based on the first message, where a requested slice included in the registration request message and the second requested slice may share a same NSSRG.

If the terminal device receives the first message from the first network device over the second access, in a possible implementation, if the first message is a registration reject message, it may indicate that the first network device rejects the second access of the terminal device, and the terminal device may re-send a registration request message to the first network device over the second access based on the first message, where a requested slice included in the registration request message and the first requested slice may share a same NSSRG.

According to the communication method provided in this embodiment of this application, the first network device may reject any access of a same terminal device, so that flexibility is higher.

Optionally, the first message may be one of a registration reject message, a registration accept message, a deregistration message, or a configuration update command message. The registration reject message indicates that a registration request initiated by the terminal device is rejected; the registration accept message indicates that a registration request initiated by the terminal device is accepted; the deregistration message indicates the terminal device to perform deregistration; and the configuration update command message is used to update a configuration of the terminal device.

If the first message is the registration reject message, the first message may further include a registration reject cause value, and the registration reject cause value may be that no network slice is available, so that the terminal device determines a registration reject cause based on the first message, and a slice subsequently requested by the terminal device shares a same NSSRG. This helps the slices requested by the terminal device share the same NSSRG.

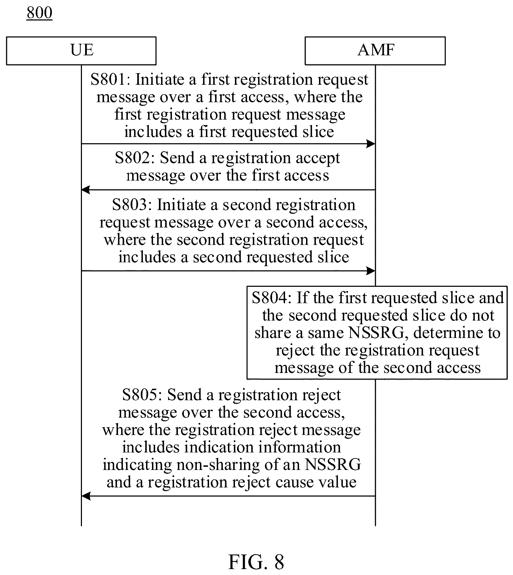

For example, a terminal device may be UE, and a first network device may be an AMF. The terminal device receives a registration reject message over a second access. FIG. 8 is a schematic flowchart of a communication method 800. As shown in FIG. 8, the method 800 may include the following steps.

S801: The UE initiates a first registration request message to the AMF over a first access, and correspondingly, the AMF receives the first registration request message, where the first registration request message includes a first requested slice, and an NSSRG corresponding to the first requested slice may be an NSSRG 1.

S802: The AMF sends a registration accept message to the UE over the first access based on the first registration request message, and correspondingly, the UE receives the registration accept message. S802 is optional.

S803: The UE initiates a second registration request message to the AMF over the second access, and correspondingly, the AMF receives the second registration request message, where the second registration request message includes a second requested slice, and an NSSRG corresponding to the second requested slice may be an NSSRG 2.

S804: If the second requested slice and the first requested slice do not share a same NSSRG, the AMF determines to reject the registration request message of the second access.

S805: The AMF sends the registration reject message to the UE over the second access, and correspondingly, the UE receives the registration reject message over the second access, where the registration reject message includes indication information indicating non-sharing of an NSSRG and a registration reject cause value, the indication information indicates that slices does not share a same NSSRG, and the registration reject cause value may be that no network slice is available.

After receiving the registration reject message over the second access, the UE may re-send a registration request message to the AMF over the second access, where a slice included in the registration request message and the first requested slice may share a same NSSRG.

According to the communication method provided in this embodiment of this application, when the UE accesses a same AMF over the first access and the second access, if requested slices do not share a same NSSRG, the AMF may send a registration reject message to the UE over the second access, and reject a registration request of the UE. This helps a slice subsequently requested by the UE share a same NSSRG.

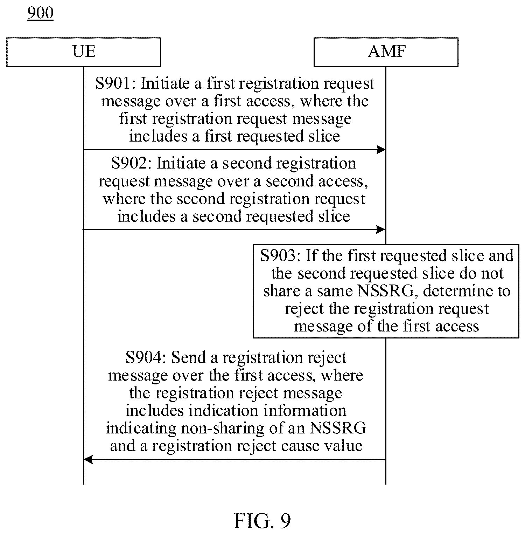

For another example, a terminal device may be UE, and a first network device may be an AMF. The terminal device receives a registration reject message over a first access. FIG. 9 is a schematic flowchart of a communication method 900. As shown in FIG. 9, the method 900 may include the following steps.

S901: The UE initiates a first registration request message to the AMF over the first access, and correspondingly, the AMF receives the first registration request message, where the first registration request message includes a first requested slice, and an NSSRG corresponding to the first requested slice may be an NSSRG 1.

S902: The UE initiates a second registration request message to the AMF over a second access, and correspondingly, the AMF receives the second registration request message, where the second registration request message includes a second requested slice, and an NSSRG corresponding to the second requested slice may be an NSSRG 2.

S903: If the second requested slice and the first requested slice do not share a same NSSRG, the AMF determines to reject the registration request message of the first access.

S904: The AMF sends the registration reject message to the UE over the first access, and correspondingly, the UE receives the registration reject message over the first access, where the registration reject message includes indication information indicating non-sharing of an NSSRG and a registration reject cause value, the indication information indicates that slices do not share a same NSSRG, and the registration reject cause value may be that no network slice is available.

After receiving the registration reject message over the first access, the UE may re-send a registration request message to the AMF over the first access, where a slice included in the registration request message and the second requested slice may share a same NSSRG.

According to the communication method provided in this embodiment of this application, when the UE accesses a same AMF over the first access and the second access, if requested slices do not share a same NSSRG, the AMF may send a registration reject message to the UE over the first access, and reject a registration request of the UE. This helps a slice subsequently requested by the UE share a same NSSRG.

If the first message is the registration accept message, the registration accept message may include indication information indicating non-sharing of an NSSRG and a slice that does not share an NSSRG, and the indication information indicates that slices do not share a same NSSRG.

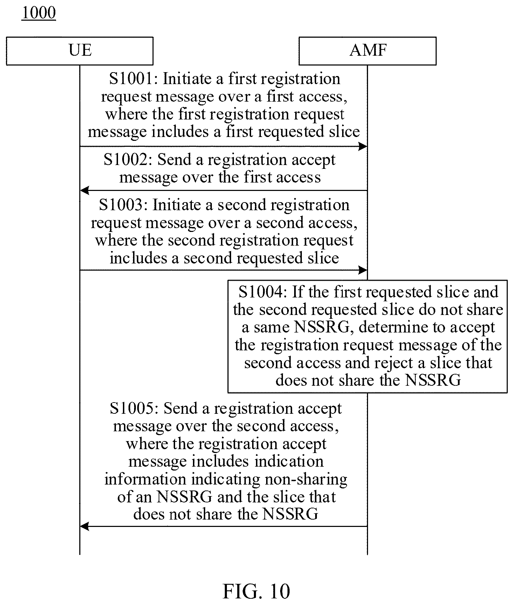

For example, a terminal device may be UE, and a first network device may be an AMF. FIG. 10 is a schematic flowchart of a communication method 1000. As shown in FIG. 10, the method 1000 may include the following steps.

S1001: The UE initiates a first registration request message to the AMF over a first access, and correspondingly, the AMF receives the first registration request message, where the first registration request message includes a first requested slice, and an NSSRG corresponding to the first requested slice may be an NSSRG 1.

S1002: The AMF sends a registration accept message to the UE over the first access based on the first registration request message, and correspondingly, the UE receives the registration accept message. S1002 is optional.

S1003: The UE initiates a second registration request message to the AMF over a second access, and correspondingly, the AMF receives the second registration request message, where the second registration request message includes a second requested slice, and an NSSRG corresponding to the second requested slice may be an NSSRG 2.

S1004: If the second requested slice and the first requested slice do not share a same NSSRG, the AMF determines to accept the registration request message of the second access and reject a slice that does not share the NSSRG.

S1005: The AMF sends a registration accept message to the UE over the second access, and correspondingly, the UE receives the registration accept message, where the registration accept message includes indication information indicating non-sharing of an NSSRG and the slice that does not share the NSSRG, and the indication information indicates that slices do not share a same NSSRG.

After receiving the registration accept message over the second access, if the UE is not satisfied with a registration result, the UE may re-send a registration request message to the AMF over the second access to request a slice, where the slice included in the registration request message and the first requested slice may share a same NSSRG.

According to the communication method provided in this embodiment of this application, when the UE accesses a same AMF over the first access and the second access, if requested slices do not share a same NSSRG, the AMF may send a registration accept message to the UE over the second access, reject a slice that does not share the same NSSRG, and accept a slice that shares the same NSSRG. This helps a slice subsequently requested by the UE share the same NSSRG.

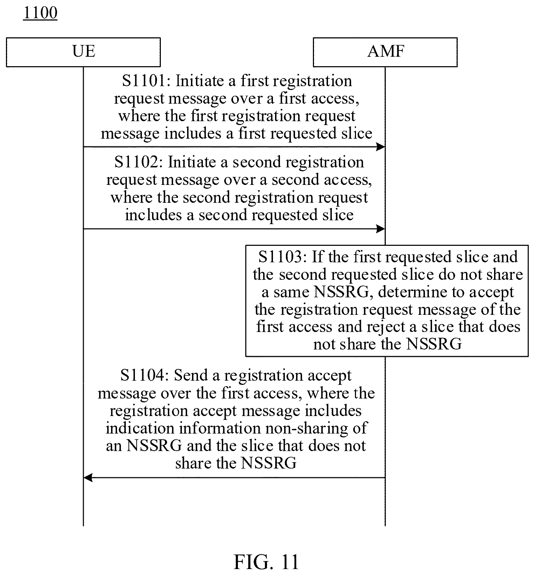

For another example, FIG. 11 is a schematic flowchart of a communication method 1100. As shown in FIG. 11, the method 1100 may include the following steps.

S1101: UE initiates a first registration request message to an AMF over a first access, and correspondingly, the AMF receives the first registration request message, where the first registration request message includes a first requested slice, and an NSSRG corresponding to the first requested slice may be an NSSRG 1.

S1102: The UE initiates a second registration request message to the AMF over a second access, and correspondingly, the AMF receives the second registration request message, where the second registration request message includes a second requested slice, and an NSSRG corresponding to the second requested slice may be an NSSRG 2.

S1103: If the second requested slice and the first requested slice do not share a same NSSRG, the AMF determines to accept the registration request message of the first access and reject a slice that does not share the NSSRG.

S1104: The AMF sends a registration accept message to the UE over the first access, and correspondingly, the UE receives the registration accept message, where the registration accept message includes indication information indicating non-sharing of an NSSRG and the slice that does not share the NSSRG, and the indication information indicates that slices do not share a same NSSRG.

After receiving the registration accept message over the first access, if the UE is not satisfied with a registration result, the UE may re-send a registration request message to the AMF over the first access to request a slice, where the slice included in the registration request message and the second requested slice may share the same NSSRG.

According to the communication method provided in this embodiment of this application, when the UE accesses a same AMF over the first access and the second access, if requested slices do not share a same NSSRG, the AMF may send a registration accept message to the UE over the first access, reject a slice that does not share the same NSSRG, and accept a slice that shares the same NSSRG. This helps a slice subsequently requested by the UE share the same NSSRG.

If the first message is the deregistration message, the first message may further include a registration reject cause value, and the registration reject cause value may be that no network slice is available, so that the terminal device determines a deregistration cause based on the first message, and a slice subsequently requested by the terminal device shares a same NSSRG. This helps the slices requested by the terminal device share the same NSSRG.

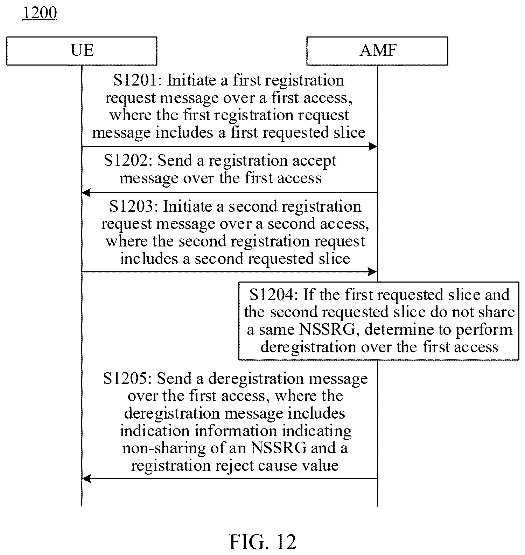

For example, a terminal device may be UE, and a first network device may be an AMF. FIG. 12 is a schematic flowchart of a communication method 1200. As shown in FIG. 12, the method 1200 may include the following steps.

S1201: The UE initiates a first registration request message to the AMF over a first access, and correspondingly, the AMF receives the first registration request message, where the first registration request message includes a first requested slice, and an NSSRG corresponding to the first requested slice may be an NSSRG 1.

S1202: The AMF sends a registration accept message to the UE over the first access based on the first registration request message, and correspondingly, the UE receives the registration accept message.

S1203: The UE initiates a second registration request message to the AMF over a second access, and correspondingly, the AMF receives the second registration request message, where the second registration request message includes a second requested slice, and an NSSRG corresponding to the second requested slice may be an NSSRG 2.

S1204: If the second requested slice and the first requested slice do not share a same NSSRG, the AMF determines to perform deregistration over the first access.

S1205: The AMF sends a deregistration message to the UE over the first access, and correspondingly, the UE receives the deregistration message over the first access, where the deregistration message includes indication information indicating non-sharing of an NSSRG and a registration reject cause value, the indication information indicates that slices do not share a same NSSRG, and the registration reject cause value may be that no network slice is available.

After receiving the deregistration message over the first access, the UE may re-send a registration request message to the AMF over the first access, where a slice included in the registration request message and the second requested slice may share the same NSSRG.

According to the communication method provided in this embodiment of this application, when the UE accesses a same AMF over the first access and the second access, if requested slices do not share a same NSSRG, the AMF may send a deregistration message to the UE over the first access, and the UE may perform re-registration over the first access. This helps a slice subsequently requested by the terminal device share a same NSSRG.

If the first message is the configuration update command message, the configuration update command message may include a slice that does not share an NSSRG and indication information indicating non-sharing of an NSSRG, and the indication information indicates that slices do not share a same NSSRG.

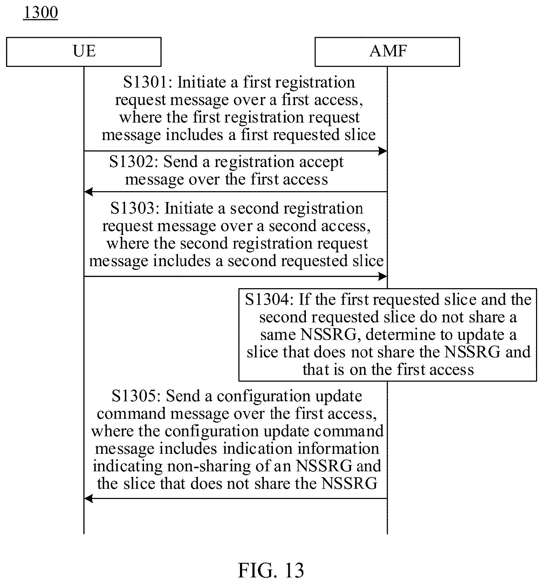

For example, a terminal device may be UE, and a first network device may be an AMF. FIG. 13 is a schematic flowchart of a communication method 1300. As shown in FIG. 13, the method 1300 may include the following steps.

S1301: The UE initiates a first registration request message to the AMF over a first access, and correspondingly, the AMF receives the first registration request message, where the first registration request message includes a first requested slice, and an NSSRG corresponding to the first requested slice may be an NSSRG 1.

S1302: The AMF sends a registration accept message to the UE over the first access based on the first registration request message, and correspondingly, the UE receives the registration accept message.

S1303: The UE initiates a second registration request message to the AMF over a second access, and correspondingly, the AMF receives the second registration request message, where the second registration request message includes a second requested slice, and an NSSRG corresponding to the second requested slice may be an NSSRG 2.

S1304: If the second requested slice and the first requested slice do not share a same NSSRG, the AMF determines to update a slice that does not share the NSSRG and that is on the first access.

S1305: The AMF sends a configuration update command message to the UE over the first access, and correspondingly, the UE receives the configuration update command message, where the configuration update command message includes indication information indicating non-sharing of an NSSRG and the slice that does not share the NSSRG, and the indication information indicates that slices do not share a same NSSRG.

After receiving the configuration update command message over the first access, the UE may update a slice configuration.

According to the communication method provided in this embodiment of this application, when the UE accesses a same AMF over the first access and the second access, if requested slices do not share a same NSSRG, the AMF may send a configuration update command message to the UE over the first access, to indicate the UE to update a slice configuration. This ensures that a slice subsequently requested by the UE shares a same NSSRG.

FIG. 8 to FIG. 13 show that the terminal device initiates registration requests to a same network device over different accesses. This embodiment of this application is further applicable to a scenario in which the terminal device is switched from accessing different networks to accessing a same network. Specifically, the terminal device may register with different networks simultaneously, to implement multi-network access. When the terminal device registers with different networks over different accesses, requested slices may not share a same NSSRG. When the terminal device registers with a same network, requested slices need to share a same NSSRG. If the terminal device is switched from accessing different networks over different accesses to accessing a same network over different accesses, a case in which slices do not share a same NSSRG may exist. In this case, the terminal device and the network device may communicate with each other by using the method provided in embodiments of this application.

Specifically, when the terminal device initiates registration requests to a first network device and a second network device over different accesses, requested slices may not share a same NSSRG. When the terminal device is switched from accessing the second network device to accessing the first network device, a case in which slices do not share a same NSSRG may exist. If the slices do not share the same NSSRG, the first network device may send a first message to the terminal device, where the first message includes indication information indicating non-sharing of an NSSRG, and the indication information indicates that slices do not share a same NSSRG. The indication information indicating non-sharing of an NSSRG may alternatively be a slice rejection cause value for not sharing an NSSRG.

The first message may be one of a registration reject message, a registration accept message, a deregistration message, or a configuration update command message.

If the first message is the registration reject message, the first message may further include a registration reject cause value, and the registration reject cause value may be that no network slice is available.

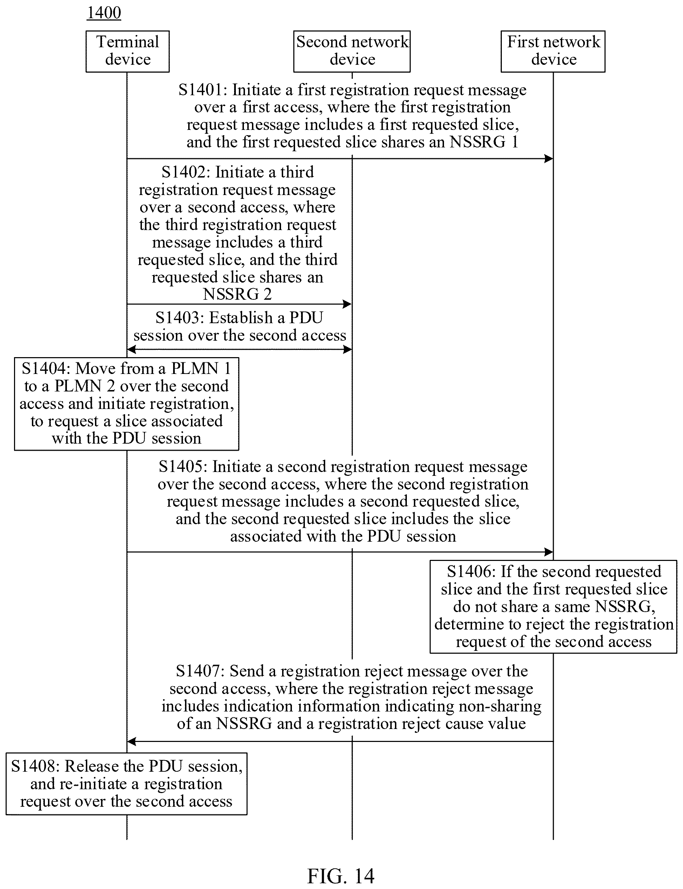

For example, FIG. 14 is a schematic flowchart of a communication method 1400. As shown in FIG. 14, the method 1400 may include the following steps.

S1401: A terminal device may initiate a first registration request message to a first network device over a first access, and correspondingly, the first network device receives the first registration request message and accepts the first registration request message, and may send a registration accept message to the terminal device. The first registration request message may include a first requested slice, and the first requested slice shares an NSSRG 1.

The terminal device may be in a registered state for the first network device over the first access.

S1402: The terminal device initiates a third registration request message to a second network device over a second access, and correspondingly, the second network device receives the third registration request message, where the third registration request includes a third requested slice, and the third requested slice shares an NSSRG 2.

S1403: The terminal device establishes a protocol data unit (protocol data unit, PDU) session on the second network device over the second access.

S1404: The terminal device moves from the second network device to the first network device over the second access, and initiates registration, to request a slice associated with the PDU.

The terminal device establishes the PDU session on the second network device over the second access. In this case, the slice associated with the PDU includes two parts: A first part is a slice corresponding to the second network device, and a second part is a slice mapped to a home public land mobile network (home public land mobile network, HPLMN). The terminal device may move from the second network device to the first network device over the second access and initiate registration, to request the slice associated with the PDU. The terminal device may be mapped to the first network device based on the PDU session to correspondingly request a slice. If the terminal device cannot find, based on an HPLMN slice of the PDU session, a current slice that is mapped from the HPLMN slice in the first network device, the terminal device performs a request directly by using the HPLMN slice, that is, performs a request directly by using the HPLMN slice associated with the PDU, for example, performs a request by using requested mapped NSSAI.

S1405: The terminal device initiates a second registration request message to the first network device over the second access, where the second registration request includes a second requested slice, and the second requested slice includes the slice associated with the PDU session.

S1406: If the second requested slice and the first requested slice do not share a same NSSRG, the first network device determines to reject the registration request message of the second access.

If the first network device may determine that the second requested slice including the slice associated with the PDU and the first requested slice do not share the same NSSRG, the first network device may determine to reject the registration request message of the second access.

S1407: The first network device sends a registration reject message over the second access, and correspondingly, the terminal device receives the registration reject message over the second access, where the registration reject message includes indication information indicating non-sharing of an NSSRG and a registration reject cause value, the indication information indicates that slices do not share a same NSSRG, and the registration reject cause value may be that no network slice is available.

The registration reject message is used to reject the registration request message of the second access. The registration reject cause value may be represented as No network slices available.

S1408: The terminal device releases the PDU session based on the registration reject message, and may re-initiate a registration request over the second access.

If the first message is the registration accept message, the registration accept message may include indication information indicating non-sharing of an NSSRG and a slice that does not share an NSSRG, and the indication information indicates that slices do not share a same NSSRG. The indication information indicating non-sharing of an NSSRG may be a slice rejection cause value for not sharing an NSSRG, and if the indication information indicating non-sharing of an NSSRG is the slice rejection cause value for not sharing an NSSRG, the indication information indicating non-sharing of an NSSRG may be represented as: rejected NSSAI for not sharing an NSSRG.

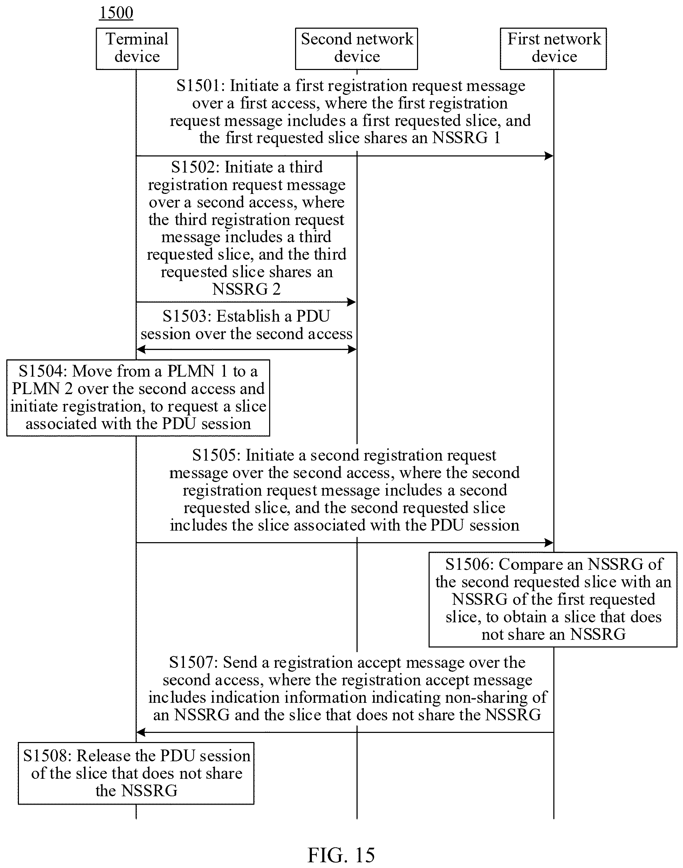

For example, FIG. 15 is a schematic flowchart of a communication method 1500. As shown in FIG. 15, the method 1500 may include the following steps.

S1501: A terminal device may initiate a first registration request message to a first network device over a first access, and correspondingly, the first network device receives the first registration request message and accepts the first registration request message, and may send a registration accept message to the terminal device. The first registration request message may include a first requested slice, and the first requested slice shares an NSSRG 1.

The terminal device may be in a registered state for the first network device over the first access.

S1502: The terminal device initiates a third registration request message to a second network device over a second access, and correspondingly, the second network device receives the third registration request message, where the third registration request includes a third requested slice, and the third requested slice shares an NSSRG 2.

S1503: The terminal device establishes a PDU session on the second network device over the second access.

S1504: The terminal device moves from the second network device to the first network device over the second access, and initiates registration, to request a slice associated with the PDU.

S1505: The terminal device initiates a second registration request message to the first network device over the second access, where the second registration request includes a second requested slice, and the second requested slice includes the slice associated with the PDU session.

S1506: The first network device compares an NSSRG of the second requested slice with an NSSRG of the first requested slice, to obtain a slice that does not share an NSSRG.

S1507: The first network device sends a registration accept message over the second access, and correspondingly, the terminal device receives the registration accept message, where the registration accept message includes indication information indicating non-sharing of an NSSRG and the slice that does not share the NSSRG, and the indication information indicates that slices do not share a same NSSRG.

S1508: The terminal device releases, based on the registration accept message, the PDU session of the slice that does not share the NSSRG.

If the first message is the deregistration message, the first message may include indication information indicating non-sharing of an NSSRG and a registration reject cause value, the indication information indicates that slices do not share a same NSSRG, and the registration reject cause value may be that no network slice is available.

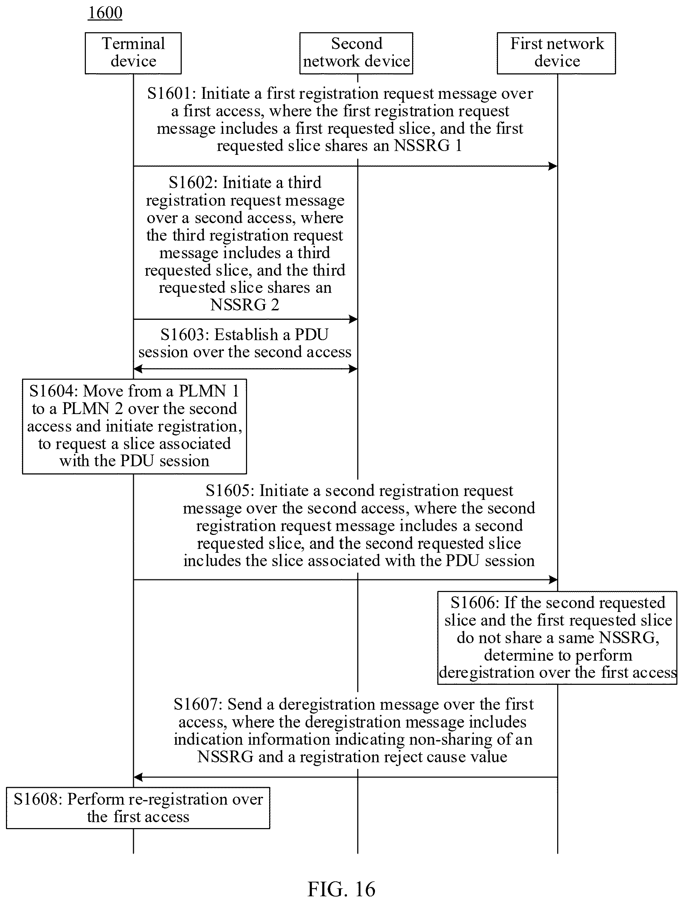

For example, FIG. 16 is a schematic flowchart of a communication method 1600. As shown in FIG. 16, the method 1600 may include the following steps.

S1601: A terminal device may initiate a first registration request message to a first network device over a first access, and correspondingly, the first network device receives the first registration request message and accepts the first registration request message, and may send a registration accept message to the terminal device. The first registration request message may include a first requested slice, and the first requested slice shares an NSSRG 1.

The terminal device may be in a registered state for the first network device over the first access.

S1602: The terminal device initiates a third registration request message to a second network device over a second access, and correspondingly, the second network device receives the third registration request message, where the third registration request includes a third requested slice, and the third requested slice shares an NSSRG 2.

S1603: The terminal device establishes a PDU session on the second network device over the second access.

S1604: The terminal device moves from the second network device to the first network device over the second access, and initiates registration, to request a slice associated with the PDU.

S1605: The terminal device initiates a second registration request message to the first network device over the second access, where the second registration request includes a second requested slice, and the second requested slice includes the slice associated with the PDU session.

S1606: If the second requested slice and the first requested slice do not share a same NSSRG, the first network device determines to perform deregistration over the first access.

If the first network device may determine that the second requested slice including the slice associated with the PDU and the first requested slice do not share the same NSSRG, the first network device may perform deregistration over the first access.

S1607: The first network device sends a deregistration message over the first access, and correspondingly, the terminal device receives the deregistration message over the first access, where the deregistration message includes indication information indicating non-sharing of an NSSRG and a registration reject cause value, the indication information indicates that slices do not share a same NSSRG, and the registration reject cause value may be that no network slice is available.

S1608: The terminal device receives the deregistration message, and may perform re-registration over the first access.

If the first message is the configuration update command message, the configuration update command message may include indication information indicating non-sharing of an NSSRG and a slice that does not share an NSSRG, and the indication information indicates that slices do not share a same NSSRG.

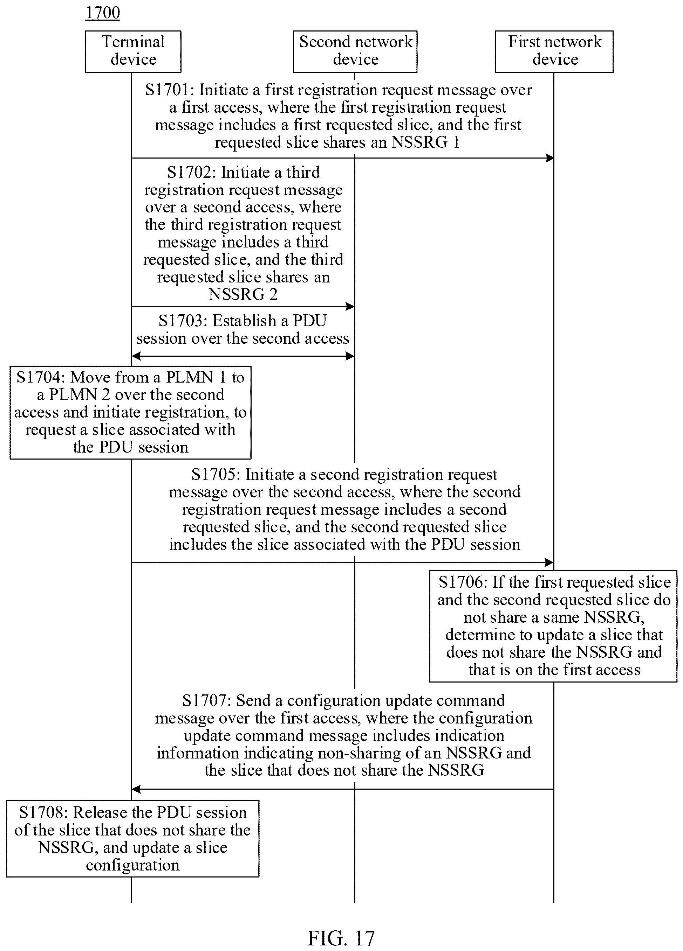

For example, FIG. 17 is a schematic flowchart of a communication method 1700. As shown in FIG. 17, the method 1700 may include the following steps.

S1701: A terminal device may initiate a first registration request message to a first network device over a first access, and correspondingly, the first network device receives the first registration request message and accepts the first registration request message, and may send a registration accept message to the terminal device. The first registration request message may include a first requested slice, and the first requested slice shares an NSSRG 1.

The terminal device may be in a registered state for the first network device over the first access.

S1702: The terminal device initiates a third registration request message to a second network device over a second access, and correspondingly, the second network device receives the third registration request message, where the third registration request includes a third requested slice, and the third requested slice shares an NSSRG 2.

S1703: The terminal device establishes a PDU session on the second network device over the second access.

S1704: The terminal device moves from the second network device to the first network device over the second access, and initiates registration, to request a slice associated with the PDU session.

S1705: The terminal device initiates a second registration request message to the first network device over the second access, where the second registration request includes a second requested slice, and the second requested slice includes the slice associated with the PDU session.

S 1706: If the second requested slice and the first requested slice do not share a same NSSRG, the first network device determines to update a slice that does not share the NSSRG and that is on the first access.

If the first network device may determine that the second requested slice including the slice associated with the PDU session and the first requested slice do not share the same NSSRG, the first network device may determine to perform configuration update over the first access.

S 1707: The first network device sends a configuration update command message over the first access, and correspondingly, the terminal device receives the configuration update command message over the first access, where the configuration update command message includes indication information indicating non-sharing of an NSSRG and the slice that does not share the NSSRG, and the indication information indicates that slices do not share a same NSSRG.

S1708: The terminal device releases, based on the configuration update command message, the session of the slice that does not share the NSSRG, and updates a slice configuration.

In addition to the foregoing method, in a scenario in which the terminal device is switched from accessing different networks over different accesses to accessing a same network over different accesses, embodiments of this application further provide two communication methods.

In a possible implementation, a slice requested when the terminal device is switched from accessing different networks over different accesses to accessing a same network over different accesses does not include a slice associated with a PDU session. Specifically, the terminal device initiates a first registration request message to a first network device over a first access, and correspondingly, the first network device receives the first registration request message, where the first registration request message includes a first requested slice. The terminal device initiates a second registration request message to a second network device over a second access, and correspondingly, the second network device receives the registration request message, where the second registration request message includes a second requested slice. A sequence in which the terminal device initiates the first registration request message to the first network device over the first access and initiates the second registration request message to the second network device over the second access is not limited. The terminal device establishes a PDU session on the second network device over the second access. The terminal device initiates a third registration request message to the first network device over the second access, where the third registration request message includes a third requested slice, and if a slice associated with the PDU session and the first requested slice do not share a same NSSRG, the third registration request message does not include the slice associated with the PDU session.

When moving from the second network device to the first network device over the second access, the terminal device needs to initiate a registration request to the first network device. If the terminal device determines that the slice associated with the PDU session and the first requested slice do not share the same NSSRG, a slice requested when the terminal device initiates the registration request to the first network device does not include the slice associated with the PDU. When the terminal device initiates the registration request to the first network device, the registration request may include the third requested slice, and the third requested slice and the first requested slice share the same NSSRG.

According to the communication method provided in this embodiment of this application, when the terminal device moves from the second network device to the first network device over the second access, the third requested slice included in the sent registration request message and the first requested slice share the same NSSRG, and the terminal device may directly access a coverage area of the first network device. This is simple and direct, and no additional indication is needed.

Optionally, before the terminal device sends the third registration request message to the first network device over the second access, the method further includes: The terminal device releases the PDU session.

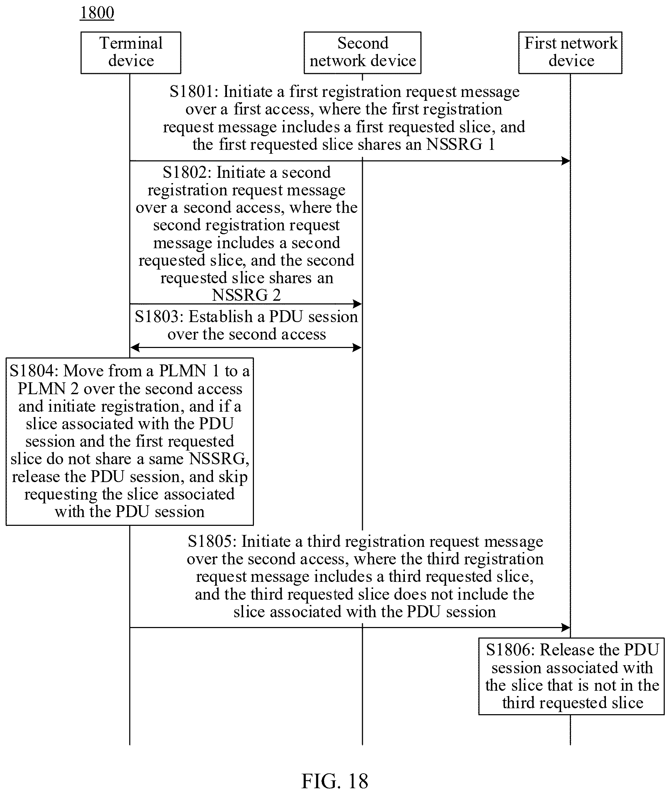

For example, FIG. 18 is a schematic flowchart of a communication method 1800. As shown in FIG. 18, the method 1800 may include the following steps.

S1801: A terminal device may initiate a first registration request message to a first network device over a first access, and correspondingly, the first network device receives the first registration request message and accepts the first registration request message, and may send a registration accept message to the terminal device. The first registration request message may include a first requested slice, and the first requested slice shares an NSSRG 1.

The terminal device may be in a registered state for the first network device over the first access.

S1802: The terminal device initiates a second registration request message to a second network device over a second access, and correspondingly, the second network device receives the second registration request message, where the second registration request message includes a second requested slice, and the second requested slice shares an NSSRG 2.

A sequence in which the terminal device initiates the first registration request message over the first access and initiates the second registration request message over the second access is not limited, that is, an execution sequence of S1801 and S1802 is not limited in this embodiment of this application.

S1803: The terminal device establishes a PDU session on the second network device over the second access.

S1804: The terminal device moves from the second network device to the first network device over the second access, and if a slice associated with the PDU session and the first requested slice do not share a same NSSRG, the terminal device releases the PDU session, and does not request the slice associated with the PDU.

If the slice associated with the PDU and the first requested slice do not share the same NSSRG, the terminal device releases the PDU session, that is, cancels establishment of the PDU session on the second network device.

S 1805: The terminal device initiates a third registration request message to the first network device over the second access, and correspondingly, the first network device receives the third registration request message, where the third registration request message includes a third requested slice, and the third requested slice does not include the slice associated with the PDU session.

The third requested slice and the first requested slice share a same NSSRG.

S 1806: The first network device releases, based on the third registration request message, the PDU session associated with the slice that is not in the third requested slice.

The first network device releases, based on the third registration request message, the PDU session associated with the slice that is not in the third requested slice, and may correctly process the third registration request message.

According to the communication method provided in this embodiment of this application, before accessing the first network device, the terminal device first releases the PDU session on the second network device, to avoid an access conflict.

In another possible implementation, when the terminal device is switched from accessing different networks to accessing a same network, if requested slices do not share a same NSSRG, the network device accepts an access request after the terminal device moves, and indicates the terminal device to perform re-registration based on a previous access request.

Specifically, the terminal device initiates a first registration request message to a first network device over a first access, where the first registration request message includes a first requested slice, and the terminal device succeeds in registration over the first access; the terminal device initiates a second registration request message to the first network device over a second access, where the second registration request message includes a second requested slice, and the second requested slice and the first requested slice do not share a same NSSRG; and the terminal device receives re-registration indication information from the first network device over the first access.

The terminal device sends a second registration request to the first network device over the second access, where a slice included in the registration request and the first requested slice do not share a same NSSRG. The first network device accepts the registration request, and sends re-registration indication information to the terminal device over the first access. The terminal device performs re-registration based on the re-registration indication information over the first access.

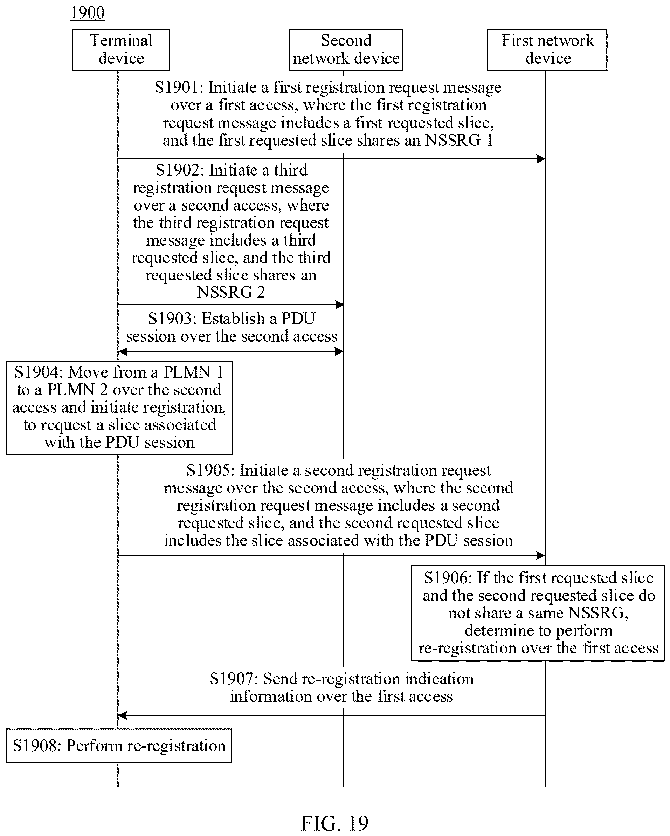

For example, FIG. 19 is a schematic flowchart of a communication method 1900. As shown in FIG. 19, the method 1900 may include the following steps.

S1901: A terminal device may initiate a first registration request message to a first network device over a first access, and correspondingly, the first network device receives the first registration request message and accepts the first registration request message, and may send a registration accept message to the terminal device. The first registration request message may include a first requested slice, and the first requested slice shares an NSSRG 1.

The terminal device may be in a registered state for the first network device over the first access.

S1902: The terminal device initiates a third registration request message to a second network device over a second access, and correspondingly, the second network device receives the third registration request message, where the third registration request message includes a third requested slice, and the third requested slice shares an NSSRG 2.

S1903: The terminal device establishes a PDU session on the second network device over the second access.

S1904: The terminal device moves from the second network device to the first network device over the second access, to request a slice associated with the PDU session.

S1905: The terminal device initiates a second registration request message to the first network device over the second access, and correspondingly, the first network device receives the second registration request message, where the second registration request message includes a second requested slice, and the second requested slice includes the slice associated with the PDU session.

S1906: If the second requested slice and the first requested slice do not share a same NSSRG, the first network device determines to perform a configuration update procedure over the first access to indicate re-registration.

S1907: The first network device sends re-registration indication information over the first access, and correspondingly, the terminal device receives the re-registration indication information over the first access.

S1908: The terminal device performs re-registration based on the re-registration indication information.

According to the method provided in this embodiment of this application, when the second requested slice and the first requested slice do not share the NSSRG, the first network device indicates the terminal device to perform re-registration on an accessed request. This helps reduce impact on services requested by the slices.

Optionally, the method further includes: The terminal device initiates a fourth registration message to the first network device based on the re-registration indication information, where the fourth registration message includes a fourth requested slice, and the fourth requested slice and the second requested slice share a same NSSRG.

After performing re-registration based on the re-registration indication information, the terminal device initiates the fourth registration message to the first network device, where the fourth registration message includes the fourth requested slice, and the fourth requested slice and the second requested slice share the same NSSRG.

According to the method provided in this embodiment of this application, the terminal device re-initiates the fourth registration message to the first network device based on the re-registration indication information, to ensure that the requested slices share the same NSSRG.

The method 200 provided in this embodiment of this application is also applicable to a scenario in which requested slices do not share a same NSSRG when the terminal device accesses different networks.

Specifically, before the first network device sends the first message to the terminal device in S202, the method 200 may further include: The terminal device initiates a first registration request message to the first network device over a first access, and correspondingly, the first network device receives the first registration request message over the first access, where the first registration request message includes a first requested slice; and the terminal device initiates a second registration request message to a second network device over a second access, and correspondingly, the second network device receives the second registration request message over the second access, where the second registration request message includes a second requested slice, and the second requested slice and the first requested slice do not share a same NSSRG.

The terminal device may first send the first registration request message to the first network device over the first access, and then send the second registration request message to the second network device over the second access; or may first send the second registration request message to the second network device over the second access, and then send the first registration request message to the first network device over the first access. This is not limited in this embodiment of this application.

When the terminal device accesses different networks, if requested slices do not share a same NSSRG, a network device in any network may send a first message to the terminal device. Specifically, in a scenario in which the first terminal device first sends the first registration request message to the first network device over the first access, and then sends the second registration request message to the second network device over the second access, the first network device sends the first message to the terminal device, that is, the first network device first accessed by the terminal device sends the first message, and before the terminal device sends the second registration request message to the second network device over the second access, the terminal device may be in a registered state or a registration attempt state on the first access. In a scenario in which the first terminal device first sends the second registration request message to the second network device over the second access, and then sends the first registration request message to the first network device over the first access, the first network device sends the first message to the terminal device, that is, the first network device then accessed by the terminal device sends the first message.

According to the communication method provided in this embodiment of this application, the terminal device sends the first registration request message to the first network device over the first access, and sends the second registration request to the second network device over the second access, where the first requested slice included in the first registration request message and the second requested slice included in the second registration request do not share the same NSSRG. The first network device may send the first message to the terminal device, and the terminal device may enable, based on the first message, a subsequently requested slice to share the same NSSRG. This helps the slices requested by the terminal device share the same NSSRG.

The method includes two possible implementations.

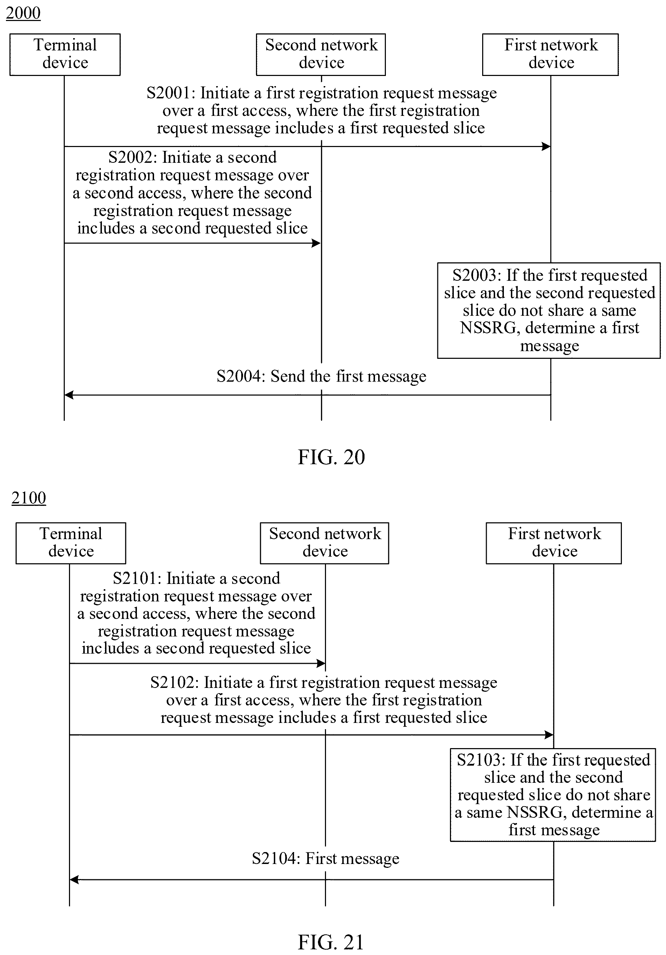

In a possible implementation, in a scenario in which the first network device first sends the first registration request message to the first network device over the first access, and then sends the second registration request message to the second network device over the second access, the first network device sends the first message to the terminal device. FIG. 20 is a schematic flowchart of a communication method 2000. As shown in FIG. 20, the method 2000 may include the following steps.

S2001: The terminal device may initiate the first registration request message to the first network device over the first access, and correspondingly, the first network device receives the first registration request message, where the first registration request message may include a first requested slice, and the first requested slice may share an NSSRG 1.

S2002: The terminal device initiates the second registration request message to the second network device over the second access, and correspondingly, the second network device receives the second registration request message, where the second registration request message may include a second requested slice, and the second requested slice may share an NSSRG 2.

S2003: If the first requested slice and the second requested slice do not share a same NSSRG, the first network device determines the first message, where the first message includes indication information indicating non-sharing of an NSSRG, and the indication information indicates that slices do not share a same NSSRG.

S2004: The first network device sends the first message over the first access, and correspondingly, the terminal device receives the first message over the first access, where the first message includes the indication information indicating non-sharing of an NSSRG, and the indication information indicates that the slices do not share the same NSSRG.

After the terminal device receives the first message over the first access, in a possible implementation, if the first message is a registration reject message or a deregistration message, the terminal device may re-initiate a registration request, and a requested slice and the second requested slice may share a same NSSRG.

According to the communication method provided in this embodiment of this application, the terminal device first performs the first access and then performs the second access. When the first requested slice included in the first registration request message and the second requested slice included in the second registration request do not share the same NSSRG, the terminal device receives the first message over the first access that is performed first, so that a subsequently requested slice and the slice requested over the second access share a same NSSRG. This helps the slices requested by the terminal device share the same NSSRG.

In another possible implementation, in a scenario in which the first network device first sends the second registration request message to the second network device over the second access, and then sends the first registration request message to the first network device over the first access, the first network device sends the first message to the terminal device. FIG. 21 is a schematic flowchart of a communication method 2100. As shown in FIG. 21, the method 2100 may include the following steps.

S2101: The terminal device may initiate the second registration request message to the second network device over the second access, and correspondingly, the second network device receives the second registration request message, where the second registration request message may include a second requested slice, and the second requested slice may share an NSSRG 2.

S2102: The terminal device initiates the first registration request message to the first network device over the first access, and correspondingly, the first network device receives the first registration request message, where the first registration request message may include a first requested slice, and the first requested slice may share an NSSRG 1.

S2103: If the first requested slice and the second requested slice do not share a same NSSRG, the first network device determines the first message, where the first message includes indication information indicating non-sharing of an NSSRG, and the indication information indicates that slices do not share a same NSSRG.

S2104: The first network device sends the first message over the first access, and correspondingly, the terminal device receives the first message over the first access.

After the terminal device receives the first message over the first access, if the first message is a registration reject message, the terminal device may re-initiate a registration request after receiving the first message, and a requested slice and the second requested slice may share a same NSSRG.

According to the communication method provided in this embodiment of this application, the terminal device first initiates registration over the second access and then initiates registration over the first access. When the first requested slice included in the first registration request message and the second requested slice included in the second registration request do not share the same NSSRG, the terminal device receives the first message over the first access over which registration is then initiated, so that a subsequently requested slice and the slice requested over the second access share a same NSSRG. This helps the slices requested by the terminal device share the same NSSRG.

Optionally, the first message may be one of a registration reject message, a registration accept message, a deregistration message, or a configuration update command message. If the first message is the deregistration message or the registration reject message, the first message may further include a registration reject cause value, and the registration reject cause value may be that no network slice is available.

Optionally, the first message may further include a slice that does not share an NSSRG.

The method 200 is further applicable to a scenario in which requested slices do not share a same NSSRG when the terminal device initiates session establishment requests to different networks over different accesses.

Specifically, before the first network device sends the first message to the terminal device in S202, the method 200 may further include: The terminal device initiates a first session establishment request message to the first network device over a first access, and correspondingly, the first network device receives the first session establishment request message over the first access, where the first session establishment request message includes a first requested slice; and the terminal device initiates a second session establishment request message to a second network device over a second access, and correspondingly, the second network device receives the second session establishment request message over the second access, where the second registration request message includes a second requested slice, and the second requested slice and the first requested slice do not share a same NSSRG. A sequence in which the terminal device initiates the first session establishment request message to the first network device over the first access and initiates the second session establishment request message to the second network device over the second access is not limited.

The terminal device is in a registered state or a registration attempt state for the first network device over the first access. If the terminal device is in the registered state for the first network device over the first access, the first message may be a session release message, and the session release message is used to release a session established by the terminal device on the first network device. If the terminal device does not receive a session establishment accept message from the first network device over the first access, the first message may be a session establishment reject message, where the session establishment reject message is used to reject a session establishment request of the terminal device to the first network device.

Optionally, the first message may alternatively be sent by the second network device to the terminal device. In other words, the terminal device initiates a session establishment request message to each of the first network device and the second network device. If requested slices do not share a same NSSRG, the first network device or the second network device sends the first message to the terminal device, where the first message includes the indication information indicating non-sharing of an NSSRG, and the indication information indicates that the slices do not share the same NSSRG.

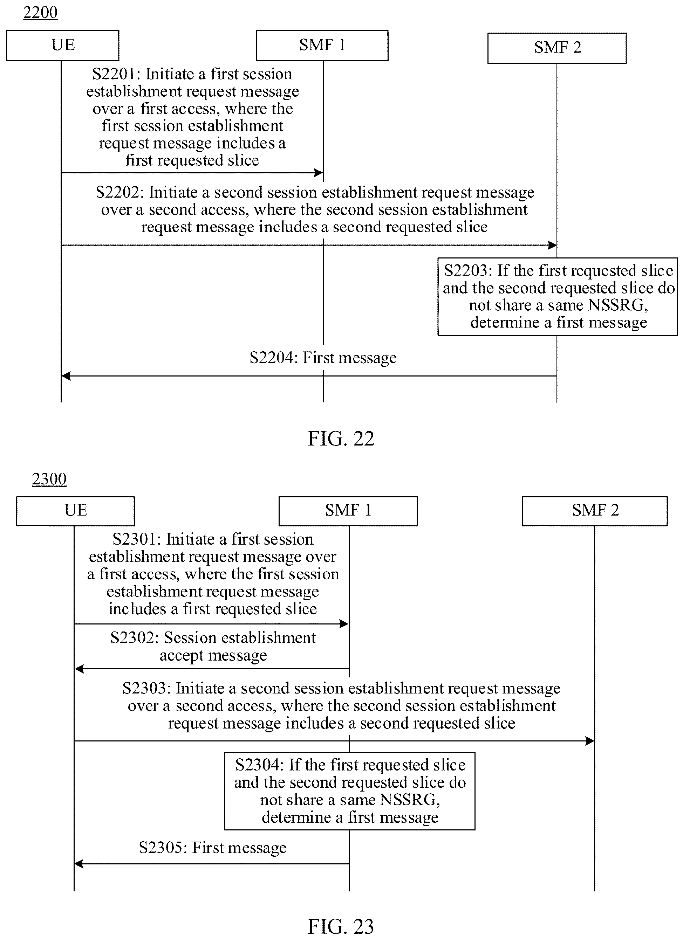

For example, a terminal device may be UE, a first network device may be a session management function (session management function, SMF) 1, and a second network device may be an SMF 2. The terminal device may receive a first message sent by the SMF 2. FIG. 22 is a schematic flowchart of a communication method 2200. As shown in FIG. 22, the method 2200 may include the following steps.

S2201: The UE initiates a first session establishment request message to the SMF 1 over a first access, and correspondingly, the SMF 1 receives the first session establishment request message, where the first session establishment request message may include a first requested slice, and the first requested slice may share an NSSRG 1.

Whether the UE receives a session establishment accept message from the SMF 1 over the first access is not limited in this embodiment of this application.

S2202: The UE initiates a second session establishment request message to the SMF 2 over a second access, and correspondingly, the SMF 2 receives the second session establishment request message, where the second session establishment request message may include a second requested slice, and the second requested slice may share an NSSRG 2.

S2203: Obtain indication information indicating that the first requested slice and the second requested slice do not share a same NSSRG, and the SMF 2 determines the first message, where the first message includes indication information indicating non-sharing of an NSSRG, and the indication information indicates that slices do not share a same NSSRG. The SMF 2 may obtain, through another network element such as an HUDM or through another network element such as an SMF, the indication information indicating that the first requested slice and the second requested slice do not share the same NSSRG.

S2204: The SMF 2 sends the first message over the second access, and correspondingly, the UE receives the first message over the second access.

The first message may be a session establishment reject message. After receiving the session establishment reject message, the UE may re-initiate a session establishment request message to the SMF 2 over the second access.

For another example, a terminal device may be UE, a first network device may be a session management function (session management function, SMF) 1, and a second network device may be an SMF 2. The terminal device may receive a first message sent by the SMF 1. FIG. 23 is a schematic flowchart of a communication method 2300. As shown in FIG. 23, the method 2300 may include the following steps.

S2301: The UE initiates a first session establishment request message to the SMF 1 over a first access, and correspondingly, the SMF 1 receives the first session establishment request message, where the first session establishment request message may include a first requested slice, and the first requested slice may share an NSSRG 1.

S2302: The SMF 1 sends a session establishment accept message to the UE based on the first session establishment request message.

S2303: The UE initiates a second session establishment request message to the SMF 2 over a second access, and correspondingly, the SMF 2 receives the second session establishment request message, where the second session establishment request message may include a second requested slice, and the second requested slice may share an NSSRG 2.

S2304: Obtain indication information indicating that the first requested slice and the second requested slice do not share a same NSSRG, and the SMF 1 determines the first message, where the first message includes indication information indicating non-sharing of an NSSRG, and the indication information indicates that slices do not share a same NSSRG. The SMF 1 may obtain, through another network element such as an HUDM or through another network element such as an SMF, the indication information indicating that the first requested slice and the second requested slice do not share the same NSSRG.

S2305: The SMF 1 sends the first message over the first access, and correspondingly, the UE receives the first message over the first access.

The first message may be a session release message. After receiving the session release message, the UE may re-initiate a session establishment request message to the SMF 1 over the first access.

According to the communication method provided in this embodiment of this application, the terminal device sends the first session establishment request message to the first network device over the first access, and sends the second session establishment request message to the second network device over the second access, where the first requested slice included in the first session establishment request message and the second requested slice included in the second session establishment request message do not share the same NSSRG. The first network device may send the first message to the terminal device, and the terminal device may enable, based on the first message, a subsequently requested slice to share a same NSSRG. This helps the slices requested by the terminal device share the same NSSRG.

When the terminal device registers with a same network device or different network devices over different accesses, slices requested by the terminal device need to share a same NSSRG. This embodiment of this application provides a communication method, to ensure that the slices requested by a same terminal device over different accesses share a same NSSRG.

Specifically, the communication method provided in this embodiment of this application includes: A third network device sends a second message to a first network device, and correspondingly, the first network device receives the second message, where the second message includes indication information indicating non-sharing of a same NSSRG, and the indication information indicates that slices do not share a same NSSRG; and the first network device receives the second message and may send a first message to a terminal device that requests access. The first message is the first message in the foregoing embodiments.

The third network device is a device different from the first network device and the second network device. For example, the third network device may be an HUDM (home unified data management). If a slice requested when the terminal device requests to access the first network device over an access and a slice requested over another access do not share a same NSSRG, the third network device may send the second message to the first network device, where the second message includes indication information indicating non-sharing of a same network slice simultaneous registration group NSSRG, and the indication information indicates that slices do not share a same NSSRG.

According to the communication method provided in this embodiment of this application, if a slice requested via a registration request received by the first network device and a slice requested over another access do not share a same NSSRG, the third network device may send the second message to the first network device. This helps ensure that the slice requested from the first network device and the slice requested over the another access share the same NSSRG.

In an optional embodiment, before the third network device sends the second message to the first network device, the method further includes: The first network device sends a first allowed slice (allowed NSSAI) to the third network device, and correspondingly, the third network device receives the first allowed slice; and the second network device sends a second requested slice (requested NSSAI) to the third network device, and correspondingly, the third network device receives the second requested slice, where the first allowed slice and the second requested slice are from a same terminal, and the first allowed slice and the second requested slice do not share a same NSSRG.

The first allowed slice may include one or more pieces of S-NSSAI. This is not limited in this embodiment of this application. An allowed slice may be represented as allowed NSSAI. In a possible implementation, the allowed NSSAI includes allowed mapped NSSAI (mapped NSSAI), and the mapped NSSAI is HPLMN NSSAI. After the terminal device initiates a registration request to the first network device and successfully requests a slice, the first network device sends a registration accept message to the terminal device. The registration accept message may include a first allowed slice, and the first allowed slice indicates a slice that the first network device allows the terminal device to access. The first network device may notify the third network device of the first allowed slice. The terminal device initiates a registration request to the second network device, where the registration request may include a second requested slice, and the first network device may notify the third network device of the second requested slice. The first allowed slice and the second requested slice do not share a same NSSRG, and the third network device may send the second message to the first network device.

According to the communication method provided in this embodiment of this application, the first network device and the second network device may send slices to the third network device, and the third network device may send the second message to the first network device. This helps ensure that slices requested by a same terminal device over different accesses share a same NSSRG.

Optionally, the second message further includes registration reject indication information, and the first network device may perform registration rejection, deregistration, or re-registration on the terminal device based on the registration reject indication information.

Optionally, the second message further includes a slice that does not share an NSSRG, so that the first network device determines the slice that does not share the same NSSRG.

In an optional embodiment, before the third network device sends the second message to the first network device, the method further includes: The second network device sends a second allowed slice to the third network device, and correspondingly, the third network device receives the second allowed slice; and the first network device sends a first requested slice to the third network device, and correspondingly, the third network device receives the first requested slice, where the first requested slice and the second allowed slice are from a same terminal, and the first requested slice and the second allowed slice do not share a same NSSRG.

The second allowed slice may include one or more pieces of S-NSSAI. This is not limited in embodiments of this application. The terminal device initiates a registration request to the second network device over a first access. The registration request may include the second allowed slice. The first network device may notify the third network device of the second allowed slice. The second allowed slice indicates a slice that the second network device allows the terminal device to access. The terminal device initiates a registration request to the first network device over a second access. The registration request may include the first requested slice. The first network device may notify the third network device of the first requested slice. The second allowed slice and the first requested slice do not share a same NSSRG, and the third network device may send the second message to the first network device.

According to the communication method provided in this embodiment of this application, the first network device and the second network device may send slices to the third network device. If the slices do not share a same NSSRG, the third network device may send the second message to the first network device. This helps ensure that slices requested over different accesses share a same NSSRG.

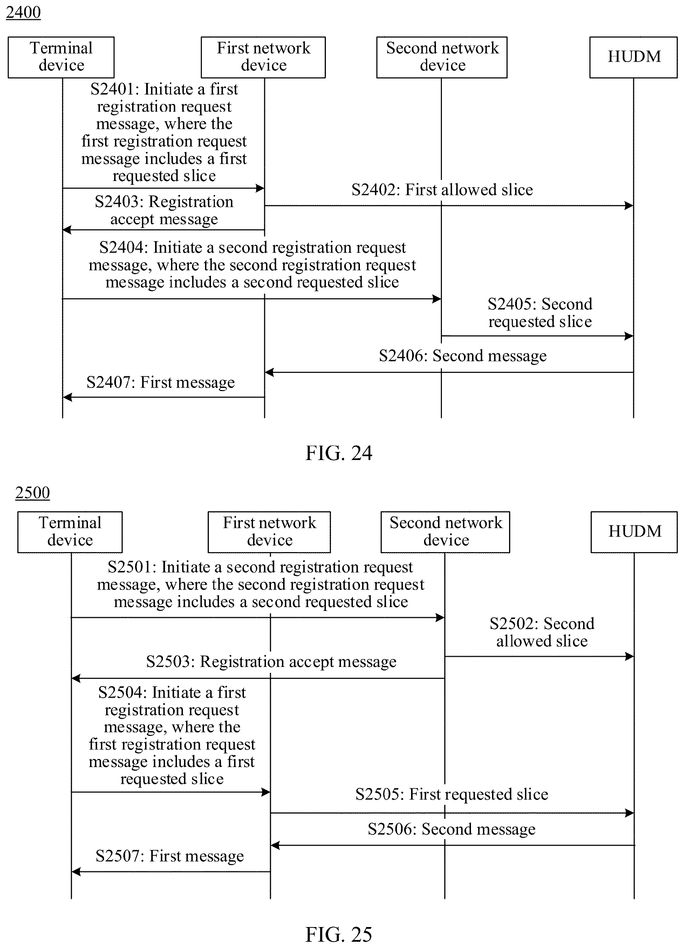

For example, a third network device may be an HUDM. FIG. 24 is a schematic flowchart of a communication method 2400. As shown in FIG. 24, the method 2400 may include the following steps.

S2401: UE initiates a first registration request message to a first network device over a first access, and correspondingly, the first network device receives the first registration request message, where the first registration request message includes a first requested slice.

S2402: The first network device determines to accept the first registration request message, and sends a first allowed slice to the HUDM, and correspondingly, the HUDM receives the first allowed slice. It may be understood that the first requested slice includes the first allowed slice.

S2403: The first network device sends a registration accept message to the UE over the first access.

An execution sequence of S2402 and S2403 is not limited in this embodiment of this application.

S2404: The UE initiates a second registration request message to a second network device over a second access, where the second registration request message includes a second requested slice.

S2405: The second network device sends the second requested slice to the HUDM, and correspondingly, the HUDM receives the second requested slice.

S2406: The HUDM sends a second message to the first network device based on the first allowed slice and the second requested slice, and correspondingly, the first network device receives the second message.

S2407: The first network device sends a first message to the UE based on the second message.

For another example, the third network device may be an HUDM. FIG. 25 is a schematic flowchart of a communication method 2500. As shown in FIG. 25, the method 2500 may include the following steps.

S2501: UE initiates a second registration request message to a second network device over a second access, and correspondingly, the second network device receives the second registration request message, where the second registration request message includes a second requested slice.

S2502: The second network device determines to accept the second registration request message, and sends a second allowed slice to the HUDM, and correspondingly, the HUDM receives the second allowed slice. It may be understood that the second requested slice includes the second allowed slice.

S2503: The second network device sends a registration accept message to the UE.

An execution sequence of S2502 and S2503 is not limited in this embodiment of this application.

S2504: The UE initiates a first registration request message to a first network device over a first access, where the first registration request message includes a first requested slice.

S2505: The first network device sends the first requested slice to the HUDM, and correspondingly, the HUDM receives the first requested slice.

S2506: The HUDM sends a second message to the first network device based on the first requested slice and the second allowed slice, and correspondingly, the first network device receives the second message.

S2507: The first network device sends a first message to the UE based on the second message.

In an optional embodiment, before the third network device sends the second message to the first network device, the method further includes: The third network device receives a first requested slice from the first network device. In a possible implementation, the first requested slice received by the third network device from the first network device includes HPLMN S-NSSAI. The third network device receives a second requested slice from the second network device. In a possible implementation, the second requested slice received by the third network device from the second network device includes HPLMN S-NSSAI. The first requested slice and the second requested slice are from a same terminal, and the first allowed slice and the second requested slice do not share a same NSSRG.

When a terminal device initiates a session establishment request to the first network device, the session establishment request may include a first requested slice, and the first network device may send the first requested slice to the third network device. When the terminal device initiates a session establishment request to the second network device, the session establishment request may include a second requested slice. The second network device may send the second requested slice to the third network device. The third network device receives the first requested slice and the second requested slice, and may determine that the first requested slice and the second requested slice are from a same terminal, and the first requested slice and the second requested slice do not share a same NSSRG, and the third network device may send a second message to the first network device or the second network device, where the second message indicates indication information indicating non-sharing of a same NSSRG, and the indication information indicates that slices do not share a same NSSRG.

If the third network device sends the second message to the first network device, the first network device may send a first message to the terminal device based on the second message. If the third network device sends the second message to the second network device, the second network device may send a first message to the terminal device based on the second message. The first message may be a session establishment reject message or a session release message. This is not limited in this embodiment of this application.

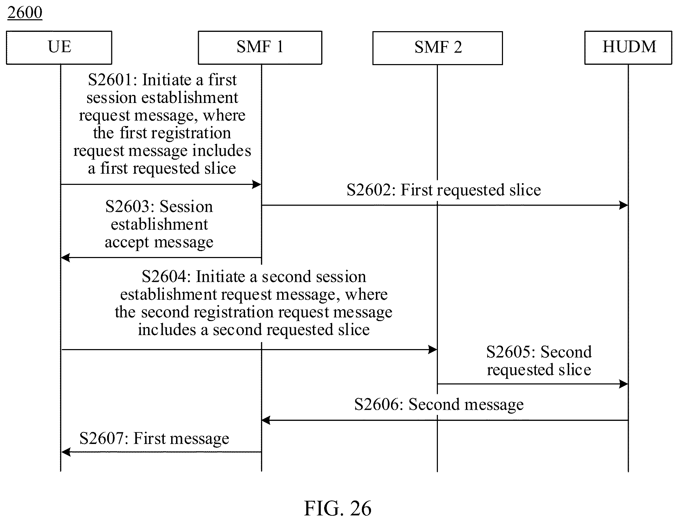

For example, a terminal device may be UE, a first network device may be an SMF 1, a second network device may be an SMF 2, and a third network device may be an HUDM. FIG. 26 is a schematic flowchart of a communication method 2600. As shown in FIG. 26, the method 2600 may include the following steps.

S2601: The UE initiates a first session establishment request message to the SMF 1 over a first access, and correspondingly, the SMF 1 receives the first session establishment request message, where the first session establishment request message includes a first requested slice.

S2602: The SMF 1 determines to accept the first session establishment request message, and sends the first requested slice to the HUDM, and correspondingly, the HUDM receives the first requested slice.

S2603: The SMF 1 sends a session establishment accept message to the UE over the first access.

An execution sequence of S2602 and S2603 is not limited in this embodiment of this application.

S2604: The UE initiates a second session establishment request message to the SMF 2 over a second access, where the second session establishment request message includes a second requested slice.

S2605: The SMF 2 sends the second requested slice to the HUDM, and correspondingly, the HUDM receives the second requested slice.

S2606: The HUDM sends a second message to the SMF 1 based on the first requested slice and the second requested slice, and correspondingly, the SMF 1 receives the second message. In a possible implementation, the HUDM determines, based on NSSRGs corresponding to HPLMN S-NSSAI included in the first requested slice and the second requested slice, to reject a PDU session of the first access.

S2607: The SMF 1 sends a first message to the UE based on the second message.

If the UE successfully establishes a session on the SMF 1 over the first access, the SMF 1 sends the first message to the UE based on the second message, where the first message may be a session release message.

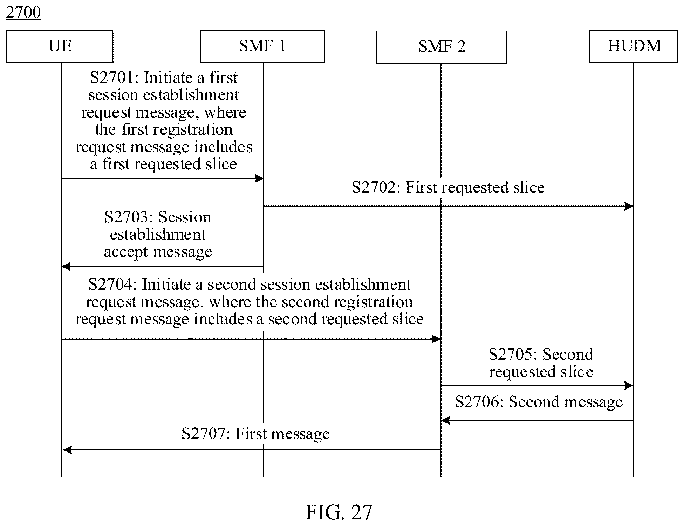

For another example, a terminal device may be UE, a first network device may be an SMF 1, a second network device may be an SMF 2, and a third network device may be an HUDM. FIG. 27 is a schematic flowchart of a communication method 2700. As shown in FIG. 27, the method 2700 may include the following steps.

S2701: The UE initiates a first session establishment request message to the SMF 1 over a first access, and correspondingly, the SMF 1 receives the first session establishment request message, where the first session establishment request message includes a first requested slice.

S2702: The SMF 1 determines to accept the first session establishment request message, and sends the first requested slice to the HUDM, and correspondingly, the HUDM receives the first requested slice.

S2703: The SMF 1 sends a session establishment accept message to the UE over the first access.

An execution sequence of S2702 and S2703 is not limited in this embodiment of this application.

S2704: The UE initiates a second session establishment request message to the SMF 2 over a second access, where the second session establishment request message includes a second requested slice.

S2705: The SMF 2 sends the second requested slice to the HUDM, and correspondingly, the HUDM receives the second requested slice.

S2706: The HUDM sends a second message to the SMF 2 based on the first requested slice and the second requested slice, and correspondingly, the SMF 2 receives the second message. In a possible implementation, the HUDM determines, based on NSSRGs corresponding to HPLMN S-NSSAI included in the first requested slice and the second requested slice, to reject a PDU session of the second access.

S2707: The SMF 2 sends a first message to the UE based on the second message.

The UE does not receive a session establishment accept message from the SMF 2 over the first access. The SMF 2 sends the first message to the UE based on the second message, where the first message may be a session establishment reject message.

According to the communication method provided in this embodiment of this application, the first network device and the second network device may send, to the third network device, slices requested by the terminal device through session establishment requests. If the slices do not share a same NSSRG, the third network device may send a second message to the first network device or the second network device. This helps ensure that slices requested over different accesses share a same NSSRG.

In an optional embodiment, before the third network device sends the second message to the first network device, the method further includes: The third network device receives a first NSSRG from the first network device; and the third network device receives a second NSSRG from the first network device, where the first NSSRG and the second NSSRG are from a same terminal, and the first NSSRG and the second NSSRG do not share a same value.

When a terminal device initiates a registration request to the first network device, a slice requested via the registration request shares a first NSSRG. When the terminal device initiates a registration request to the second network device, a slice requested via the registration request shares a second NSSRG. The third network device receives the first NSSRG and the second NSSRG, and if the first NSSRG and the second NSSRG do not share a same value, the third network device sends the second message to the first network device.

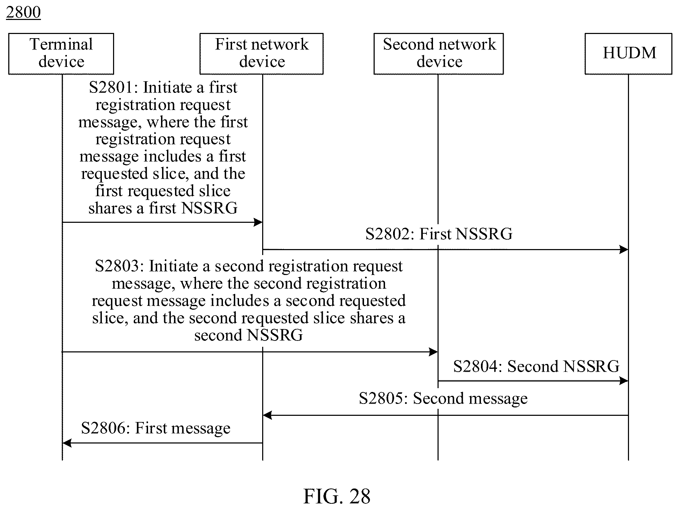

For example, the third network device may be an HUDM. FIG. 28 is a schematic flowchart of a communication method 2800. As shown in FIG. 28, the method 2800 may include the following steps.

S2801: UE initiates a first registration request message to a first network device, and correspondingly, the first network device receives the first registration request message, where the first registration request message includes a first requested slice, and the first requested slice shares a first NSSRG. In S2801, if the UE initiates a first session request message to the first network device, the first session request message includes a first requested slice. This scenario is also applicable.

S2802: The first network device sends the first NSSRG to the HUDM, and correspondingly, the HUDM receives the first NSSRG.

S2803: The UE initiates a second registration request message to a second network device, where the second registration request message includes a second requested slice, and the second requested slice shares a second NSSRG. In S2803, if the UE initiates a second session request message to the second network device, the second session request message includes a second requested slice. This scenario is also applicable.

S2804: The second network device sends the second NSSRG to the HUDM, and correspondingly, the HUDM receives the second NSSRG.

S2805: The HUDM sends a second message to the first network device based on the first NSSRG and the second NSSRG, and correspondingly, the first network device receives the second message.

S2806: The first network device sends a first message to the UE based on the second message.

According to the communication method provided in this embodiment of this application, the first network device and the second network device may send NSSRGs associated with slices requested over corresponding accesses to the third network device. If the slices do not share a same NSSRG, the third network device may send a second message to the first network device. This helps ensure that slices requested by the terminal device over different accesses share a same NSSRG.

Optionally, if the first NSSRG and the second NSSRG do not share the same value, the third network device may alternatively send the second message to the second network device.

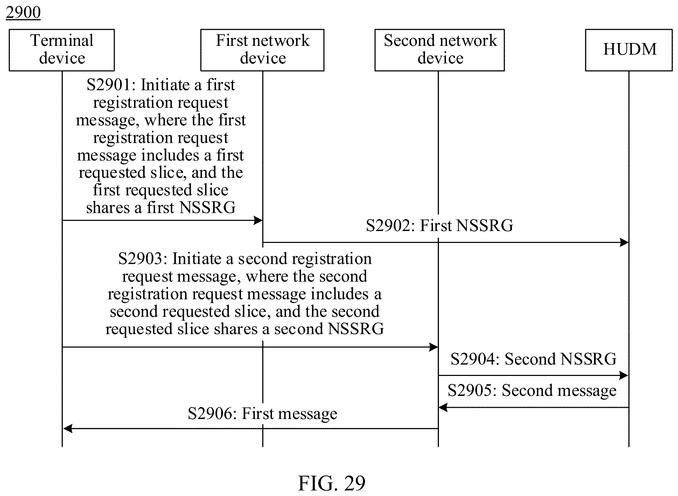

For example, the third network device may be an HUDM. FIG. 29 is a schematic flowchart of a communication method 2900. As shown in FIG. 29, the method 2900 may include the following steps.

S2901: UE initiates a first registration request message to a first network device, and correspondingly, the first network device receives the first registration request message, where the first registration request message includes a first requested slice, and the first requested slice shares a first NSSRG. In S2901, if the UE initiates a first session request message to the first network device, the first session request message includes a first requested slice. This scenario is also applicable.

S2902: The first network device sends the first NSSRG to the HUDM, and correspondingly, the HUDM receives the first NSSRG.

S2903: The UE initiates a second registration request message to a second network device, where the second registration request message includes a second requested slice, and the second requested slice shares a second NSSRG. In S2903, if the UE initiates a second session request message to the second network device, the second session request message includes a second requested slice. This scenario is also applicable.

S2904: The second network device sends the second NSSRG to the HUDM, and correspondingly, the HUDM receives the second NSSRG.

S2906: The HUDM sends a second message to the second network device based on the first NSSRG and the second NSSRG, and correspondingly, the second network device receives the second message.

S2907: The second network device sends a first message to the UE based on the second message.

According to the communication method provided in this embodiment of this application, the first network device and the second network device may send NSSRGs associated with slices requested over corresponding accesses to the third network device. If the slices do not share a same NSSRG, the third network device may send a second message to the second network device. This helps ensure that slices requested by the terminal device over different accesses share a same NSSRG.

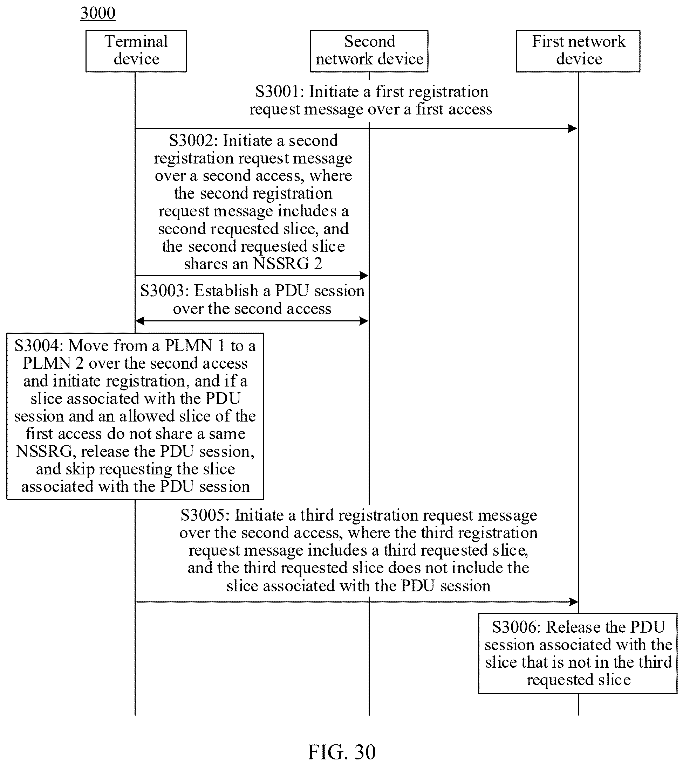

In the embodiment shown in FIG. 18, the terminal device initiates the first registration request message to the first network device over the first access, where the first registration request message may include the first requested slice. In some other implementations, the terminal device initiates the first registration request message to the first network device over the first access, where the first registration request message may not include the first requested slice. This is not limited in this embodiment of this application. The foregoing describes an example in which the first registration request message includes the first requested slice in FIG. 18. The following describes, with reference to FIG. 30, an example in which the first registration request message does not include the first requested slice.

For example, FIG. 30 is a schematic flowchart of a communication method 3000. As shown in FIG. 30, the method 3000 may include the following steps.

S3001: A terminal device may initiate a first registration request message to a first network device over a first access, and correspondingly, the first network device receives the first registration request message and accepts the first registration request message, and may send a registration accept message to the terminal device.

The terminal device may be in a registered state for the first network device over the first access.

S3002: The terminal device initiates a second registration request message to a second network device over a second access, and correspondingly, the second network device receives the second registration request message, where the second registration request message includes a second requested slice, and the second requested slice shares an NSSRG 2.

S3003: The terminal device establishes a PDU session on the second network device over the second access.

For S3003 and S3003, refer to S1802 and S1803. Details are not described herein again.

S3004: The terminal device moves from the second network device to the first network device over the second access, and if a slice associated with the PDU session and an allowed slice of the first access do not share a same NSSRG, the terminal device releases the PDU session, and does not request the slice associated with the PDU.

If the slice associated with the PDU and the allowed slice of the first access do not share the same NSSRG, the terminal device releases the PDU session, that is, cancels establishment of the PDU session on the second network device.

S3005: The terminal device initiates a third registration request message to the first network device over the second access, and correspondingly, the first network device receives the third registration request message, where the third registration request message includes a third requested slice, and the third requested slice does not include the slice associated with the PDU session.

The third requested slice and the allowed slice of the first access share a same NSSRG.

S3006: The first network device releases, based on the third registration request message, the PDU session associated with the slice that is not in the third requested slice.

The first network device releases, based on the third registration request message, the PDU session associated with the slice that is not in the third requested slice, and may correctly process the third registration request message.

According to the communication method provided in this embodiment of this application, even if the first registration request message does not include the slice, a corresponding function can also be implemented, thereby helping reduce signaling power consumption.

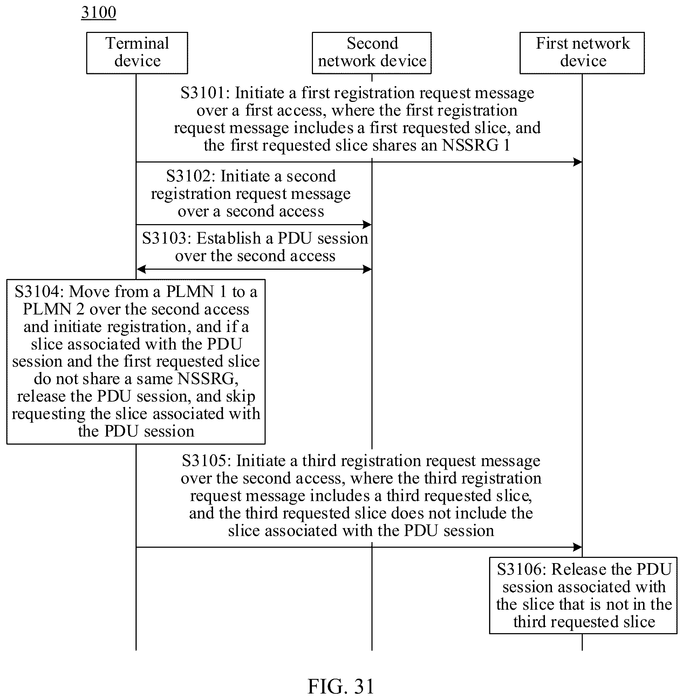

In the embodiment shown in FIG. 18, the terminal device initiates the second registration request message to the second network device over the second access, where the second registration request message may include the second requested slice. In some other implementations, the terminal device initiates the second registration request message to the first network device over the second access, where the second registration request message may not include the second requested slice. This is not limited in this embodiment of this application. The foregoing describes an example in which the second registration request message includes the second requested slice in FIG. 18. The following describes, with reference to FIG. 31, an example in which the second registration request message does not include the second requested slice.

For example, FIG. 31 is a schematic flowchart of a communication method 3100. As shown in FIG. 31, the method 3100 may include the following steps.

S3101: A terminal device may initiate a first registration request message to a first network device over a first access, and correspondingly, the first network device receives the first registration request message and accepts the first registration request message, and may send a registration accept message to the terminal device. The first registration request message may include a first requested slice, and the first requested slice shares an NSSRG 1.

For this step, refer to S1801. Details are not described herein again.

S3102: The terminal device initiates a second registration request message to a second network device over a second access, and correspondingly, the second network device receives the second registration request message.

A sequence in which the terminal device initiates the first registration request message over the first access and initiates the second registration request message over the second access is not limited, that is, an execution sequence of S3101 and S3102 is not limited in this embodiment of this application.

S3103: The terminal device establishes a PDU session on the second network device over the second access.

S3104: The terminal device moves from the second network device to the first network device over the second access, and if a slice associated with the PDU session and the first requested slice do not share a same NSSRG, the terminal device releases the PDU session, and does not request the slice associated with the PDU.

S3105: The terminal device initiates a third registration request message to the first network device over the second access, and correspondingly, the first network device receives the third registration request message, where the third registration request message includes a third requested slice, and the third requested slice does not include the slice associated with the PDU session.

S3106: The first network device releases, based on the third registration request message, the PDU session associated with the slice that is not in the third requested slice.

For S3103 to S3106, refer to S1803 to S1806. Details are not described herein again.

According to the communication method provided in this embodiment of this application, even if the second registration request message does not include the slice, a corresponding function can also be implemented, thereby helping reduce signaling power consumption.

Sequence numbers of the foregoing processes do not mean execution sequences. The execution sequences of the processes should be determined based on functions and internal logic of the processes, and should not constitute any limitation on implementation processes of embodiments of this application.

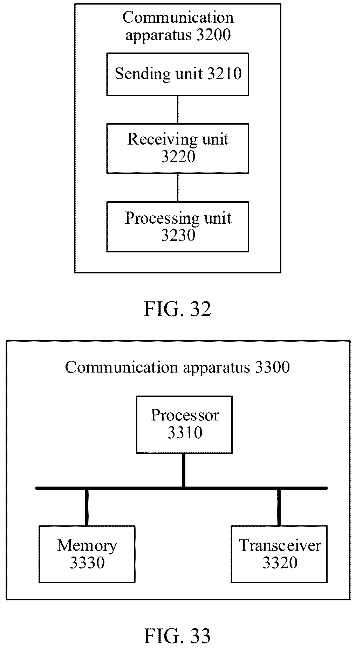

The foregoing describes in detail the communication method in embodiments of this application with reference to FIG. 1 to FIG. 31. The following describes in detail a communication apparatus in embodiments of this application with reference to FIG. 32 and FIG. 33.

FIG. 32 is a block diagram of a communication apparatus 3200 according to an embodiment of this application. The communication apparatus 3200 may include a sending unit 3210, a receiving unit 3220, and a processing unit 3230.

In a possible implementation, the communication apparatus 3200 may perform the steps performed by the terminal device in the foregoing method.

The receiving unit 3220 is configured to receive a first message from a first network device, where the first message includes indication information indicating non-sharing of a network slice simultaneous registration group NSSRG, and the indication information indicates that slices do not share a same NSSRG. Alternatively, the sending unit 3210 is configured to initiate a first registration request message to a first network device over a first access, where the first registration request message includes a first requested slice; and initiate a second registration request message to a second network device over a second access, where the second registration request message includes a second requested slice. The processing unit 3230 is configured to establish a protocol data unit PDU session over the second access. The sending unit 3210 is further configured to initiate a third registration request message to the first network device over the second access, where the third registration request message includes a third requested slice, and if a slice associated with the PDU session and the first requested slice do not share a same network slice simultaneous registration group NSSRG, the third registration request message does not include the slice associated with the PDU session. Alternatively, the sending unit 3210 is configured to initiate a first registration request message to a first network device over a first access, where the first registration request message includes a first requested slice; and initiate a second registration request message to a second network device over a second access, where the second registration request message includes a second requested slice, and the second requested slice and the first requested slice do not share a same network slice simultaneous registration group NSSRG. The receiving unit 3220 is configured to receive re-registration indication information from the first network device over the first access.

In another possible implementation, the communication apparatus 3200 may perform the steps performed by the first network device in the foregoing method.

The sending unit 3210 is configured to send a first message to a terminal device, where the first message includes indication information indicating non-sharing of a network slice simultaneous registration group NSSRG, and the indication information indicates that slices do not share a same NSSRG. Alternatively, the receiving unit 3220 is configured to receive, over a first access, a first registration request message initiated by a terminal device, where the first registration request message includes a first requested slice; and receive, over a second access, a second registration request message initiated by the terminal device, where the second registration request message includes a second requested slice. The sending unit 3210 is configured to: if the second requested slice and the first requested slice do not share a same network slice simultaneous registration group NSSRG, send re-registration indication information to the terminal device over the first access. Alternatively, the receiving unit 3220 is configured to receive, over a first access, a first registration request message initiated by a terminal device, where the first registration request message includes a first requested slice, the first requested slice and a second requested slice do not share a same network slice simultaneous registration NSSRG, and the second requested slice is a slice requested when the terminal device initiates a second registration request message to a second network device. The sending unit 3210 is configured to send re-registration indication information to the terminal device over the first access. Alternatively, the receiving unit 3220 is configured to receive a second message from a third network device, where the second message includes indication information indicating non-sharing of a same network slice simultaneous registration group NSSRG, and the indication information indicates that slices do not share a same NSSRG. The sending unit 3210 is configured to send a first message to a terminal device based on the indication information, where the first message includes a slice rejection cause value for not sharing an NSSRG, and the slice rejection cause value for not sharing an NSSRG indicates that slices requested by the terminal device do not share a same NSSRG.

In still another possible implementation, the communication apparatus 3200 may perform the steps performed by the third network device.

The sending unit 3210 is configured to send a second message to a first network device, where the second message includes indication information indicating non-sharing of a same network slice simultaneous registration group NSSRG, and the indication information indicates that slices do not share a same NSSRG.

It should be understood that the communication apparatus 3200 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the communication apparatus 3200 may be specifically the terminal device, the first network device, or the third network device in the foregoing embodiments, and the communication apparatus 3200 may be configured to perform procedures and/or steps corresponding to the terminal device, the first network device, or the third network device in the foregoing method embodiments. To avoid repetition, details are not described herein again.

The communication apparatus 3200 in the foregoing solutions has functions of implementing corresponding steps performed by the terminal device, the first network device, or the third network device in the foregoing methods. The foregoing functions may be implemented by hardware, or may be implemented by hardware by executing corresponding software. The hardware or the software includes one or more modules corresponding to the function.

In this embodiment of this application, the communication apparatus 3200 in FIG. 32 may alternatively be a chip or a chip system, for example, a system on chip (system on chip, SoC).

FIG. 33 is a block diagram of another communication apparatus 3300 according to an embodiment of this application. The communication apparatus 3300 includes a processor 3310, a transceiver 3320, and a memory 3330. The processor 3310, the transceiver 3320, and the memory 3330 communicate with each other through an internal connection path. The memory 3330 is configured to store instructions. The processor 3310 is configured to execute the instructions stored in the memory 3330, to control the transceiver 3320 to send a signal and/or receive a signal.

It should be understood that the communication apparatus 3300 may be specifically the terminal device, the first network device, or the third network device in the foregoing embodiments, and may be configured to perform steps and/or procedures corresponding to the terminal device, the first network device, or the third network device in the foregoing method embodiments. Optionally, the memory 3330 includes a read-only memory and a random access memory, and provide instructions and data to the processor. A part of the memory may further include a nonvolatile random access memory. For example, the memory may further store information of a device type. The processor 3310 may be configured to execute the instructions stored in the memory, and when the processor 3310 executes the instructions stored in the memory, the processor 3310 is configured to perform steps and/or procedures in the method embodiments corresponding to the terminal device, the first network device, or the third network device. The transceiver 3320 may include a transmitter and a receiver. The transmitter may be configured to implement steps and/or procedures that correspond to the transceiver and that are used to perform a sending action, and the receiver may be configured to implement steps and/or procedures that correspond to the transceiver and that are used to perform a receiving action.

It should be understood that, in embodiments of this application, the processor of the foregoing apparatus may be a central processing unit (central processing unit, CPU). Alternatively, the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by a combination of hardware and software units in the processor. A software unit may be located in a mature storage medium in the art, such as a random access memory, a flash memory, a read-only memory, a programmable read-only memory, an electrically erasable programmable memory, a register, or the like. The storage medium is located in the memory, and a processor reads instructions in the memory and completes the steps in the foregoing methods in combination with hardware of the processor. To avoid repetition, details are not described herein again.

An embodiment of this application further provides a communication system. The communication system may include the terminal device and the first network device in the foregoing embodiments, or include the terminal device, the first network device, and the third network device in the foregoing embodiments.

An embodiment of this application provides a readable computer storage medium. The readable computer storage medium is configured to store a computer program, and the computer program is used to implement the method corresponding to the terminal device shown in the possible implementations in the foregoing embodiments.

An embodiment of this application provides another readable computer storage medium. The readable computer storage medium is configured to store a computer program, and the computer program is used to implement the method corresponding to the first network device shown in the possible implementations in the foregoing embodiments.

An embodiment of this application provides still another readable computer storage medium. The readable computer storage medium is configured to store a computer program, and the computer program is used to implement the method corresponding to the third network device shown in the possible implementations in the foregoing embodiments.

An embodiment of this application provides a computer program product. The computer program product includes a computer program (which may also be referred to as code or instructions). When the computer program is run on a computer, the computer may perform the method corresponding to the terminal device shown in the foregoing embodiments.

An embodiment of this application provides another computer program product. The computer program product includes a computer program (which may also be referred to as code or instructions). When the computer program is run on a computer, the computer may perform the method corresponding to the first network device shown in the possible implementations in the foregoing embodiments.

An embodiment of this application provides still another computer program product. The computer program product includes a computer program (which may also be referred to as code or instructions). When the computer program is run on a computer, the computer may perform the method corresponding to the third network device shown in the possible implementations in the foregoing embodiments.

An embodiment of this application provides a chip system. The chip system is configured to support the foregoing terminal device in implementing the functions shown in embodiments of this application.

An embodiment of this application provides another chip system. The chip system is configured to support the first network device in implementing the functions shown in embodiments of this application.

An embodiment of this application provides still another chip system. The chip system is configured to support the third network device in implementing the functions shown in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a receiver, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, a first message from a first network device, wherein the first message comprises indication information indicating non-sharing of a network slice simultaneous registration group NSSRG, and the indication information indicates that slices do not share a same NSSRG.

2. The method according to claim 1, wherein before receiving, by the terminal device, the first message from the first network device, the method further comprises:
initiating, by the terminal device, a first registration request message to the first network device over a first access, wherein the first registration request message comprises a first requested slice; and
initiating, by the terminal device, a second registration request message to the first network device over a second access, wherein the second registration request message comprises a second requested slice, and
the second requested slice and the first requested slice do not share a same NSSRG.

3. The method according to claim 2, wherein the first message is received over the first access or the second access.

4. The method according to claim 1, wherein before receiving, by the terminal device, the first message from the first network device, the method further comprises:
initiating, by the terminal device, a first registration request message to the first network device over a first access, wherein the first registration request message comprises a first requested slice; and
initiating, by the terminal device, a second registration request message to a second network device over a second access, wherein the second registration request message comprises a second requested slice, and
the second requested slice and the first requested slice do not share a same NSSRG.

5. The method according to claim 1, wherein before receiving, by the terminal device, the first message from the first network device, the method further comprises:
initiating, by the terminal device, a first session establishment request message to the first network device over a first access, wherein the first session establishment request message comprises a first requested slice; and
initiating, by the terminal device, a second session establishment request message to a second network device over a second access, wherein the second session establishment request message comprises a second requested slice, and
the second requested slice and the first requested slice do not share a same NSSRG.

6. The method according to claim 1, wherein the first message is one of a registration reject message, a registration accept message, a deregistration message, a configuration update command message, a session establishment reject message, or a session release message;
the registration reject message indicates that a registration request initiated by the terminal device is rejected;
the registration accept message indicates that a registration request initiated by the terminal device is accepted;
the deregistration message indicates the terminal device to perform deregistration;
the configuration update command message is used to update a configuration of the terminal device;
the session establishment reject message is used to reject a session establishment request of the terminal device; and
the session release message is used to release a session established by the terminal device.

7. The method according to claim 6, wherein if the first message is the deregistration message or the registration reject message, the first message further comprises a registration reject cause value, and the registration reject cause value is that no network slice is available.

8. The method according to any one of claims 1 to 7, wherein the first message further comprises a slice that does not share an NSSRG.

9. A communication method, comprising:
initiating, by a terminal device, a first registration request message to a first network device over a first access;
initiating, by the terminal device, a second registration request message to a second network device over a second access;
establishing, by the terminal device, a protocol data unit PDU session over the second access; and
initiating, by the terminal device, a third registration request message to the first network device over the second access, wherein the third registration request message comprises a third requested slice, and
if a slice associated with the PDU session and an allowed slice of the first access do not share a same network slice simultaneous registration group NSSRG, the third registration request message does not comprise the slice associated with the PDU session.

10. The method according to claim 9, wherein before sending, by the terminal device, the third registration request message to the first network device over the second access, the method further comprises:
releasing, by the terminal device, the PDU session.

11. The method according to claim 9 or 10, wherein the first registration request message comprises a first requested slice, and that the slice associated with the PDU session and the allowed slice of the first access do not share the same network slice simultaneous registration group NSSRG comprises: the slice associated with the PDU session and the first requested slice do not share the same network slice simultaneous registration group NSSRG.

12. The method according to any one of claims 9 to 11, wherein the second registration request message comprises a second requested slice.

13. A communication method, comprising:
initiating, by a terminal device, a first registration request message to a first network device over a first access, wherein the first registration request message comprises a first requested slice, and the terminal device succeeds in registration over the first access;
initiating, by the terminal device, a second registration request message to the first network device or a second network device over a second access, wherein the second registration request message comprises a second requested slice, and the second requested slice and the first requested slice do not share a same network slice simultaneous registration group NSSRG; and
receiving, by the terminal device, re-registration indication information from the first network device over the first access.

14. The method according to claim 13, wherein the method further comprises:
initiating, by the terminal device, a third registration message to the first network device based on the re-registration indication information, wherein the third registration message comprises a third requested slice, and the third requested slice and the second requested slice share a same NSSRG.

15. A communication method, comprising:
sending, by a first network device, a first message to a terminal device, wherein the first message comprises indication information indicating non-sharing of a network slice simultaneous registration group NSSRG, and the indication information indicates that slices do not share a same NSSRG.

16. The method according to claim 15, wherein before sending, by the first network device, the first message to the terminal device, the method further comprises:
receiving, by the first network device, a first registration request message from the terminal device, wherein the first registration request message comprises a first requested slice; and
updating, by the first network device, NSSRG information, to obtain updated NSSRG information; and
sending, by the first network device, the first message to the terminal device comprises:
if the first requested slice does not share a same NSSRG based on the updated NSSRG information, sending, by the first network device, the first message to the terminal device.

17. The method according to claim 15, wherein before sending, by the first network device, the first message to the terminal device, the method further comprises:
receiving, by the first network device over a first access, a first registration request message initiated by the terminal device, wherein the first registration request message comprises a first requested slice; and
receiving, by the first network device over a second access, a second registration request message initiated by the terminal device, wherein the second registration request message comprises a second requested slice, and
the second requested slice and the first requested slice do not share a same NSSRG.

18. The method according to claim 17, wherein the first message is sent over the first access or the second access.

19. The method according to claim 15, wherein before sending, by the first network device, the first message to the terminal device, the method further comprises:
receiving, by the first network device over a first access, a first registration request message initiated by the terminal device, wherein the first registration request message comprises a first requested slice; and
obtaining indication information indicating that the first requested slice and a second requested slice do not share a same NSSRG, wherein the second requested slice is a slice requested when the terminal device initiates a second registration request message to a second network device over a second access.

20. The method according to claim 15, wherein before sending, by the first network device, the first message to the terminal device, the method further comprises:
receiving, by the first network device, a first session establishment request message from the terminal device over a first access, wherein the first session establishment request message comprises a first requested slice; and
obtaining indication information indicating that the first requested slice and a second requested slice do not share a same NSSRG, wherein the second requested slice is a slice requested when the terminal device initiates a second session establishment request message to a second network device over a second access.

21. The method according to claim 15, wherein the first message is one of a registration reject message, a registration accept message, a deregistration message, a configuration update command message, a session establishment reject message, or a session release message;
the registration reject message indicates that a registration request initiated by the terminal device is rejected;
the registration accept message indicates that a registration request initiated by the terminal device is accepted;
the deregistration message indicates the terminal device to perform deregistration;
the configuration update command message is used to update a configuration of the terminal device;
the session establishment reject message is used to reject a session establishment request of the terminal device; and
the session release message is used to release a session established by the terminal device.

22. The method according to claim 21, wherein if the first message is the deregistration message or the registration reject message, the first message further comprises a registration reject cause value, and the registration reject cause value is that no network slice is available.

23. The method according to any one of claims 15 to 22, wherein the first message further comprises a rejected slice that does not share an NSSRG.

24. A communication method, comprising:
receiving, by a first network device over a first access, a first registration request message initiated by a terminal device, wherein the first registration request message comprises a first requested slice;
receiving, by the first network device over a second access, a second registration request message initiated by the terminal device, wherein the second registration request message comprises a second requested slice, and
if the second requested slice and the first requested slice do not share a same network slice simultaneous registration group NSSRG, sending, by the first network device, re-registration indication information to the terminal device over the first access.

25. The method according to claim 24, wherein the method further comprises:
receiving, by the first network device over the first access, a third registration request message initiated by the terminal device, wherein the third registration request message comprises a third requested slice, and the third requested slice and the second requested slice share a same NSSRG.

26. A communication method, comprising:
receiving, by a first network device over a first access, a first registration request message initiated by a terminal device, wherein the first registration request message comprises a first requested slice, the first requested slice and a second requested slice do not share a same network slice simultaneous registration group NSSRG, and the second requested slice is a slice requested when the terminal device initiates a second registration request message to a second network device; and
sending, by the first network device, re-registration indication information to the terminal device over the first access.

27. The method according to claim 26, wherein the method further comprises:
receiving, by the first network device over the first access, a third registration request message initiated by the terminal device, wherein the third registration request message comprises a third requested slice, and the third requested slice and the second requested slice share a same NSSRG.

28. A communication method, comprising:
sending, by a third network device, a second message to a first network device, wherein the second message comprises indication information indicating non-sharing of a same network slice simultaneous registration group NSSRG, and the indication information indicates that slices do not share a same NSSRG.

29. The method according to claim 28, wherein before sending, by the third network device, the second message to the first network device, the method further comprises:
receiving, by the third network device, a first allowed slice from the first network device; and
receiving, by the third network device, a second requested slice from a second network device, wherein
the first allowed slice and the second requested slice are from a same terminal, and the first allowed slice and the second requested slice do not share a same NSSRG.

30. The method according to claim 28, wherein before sending, by the third network device, the second message to the first network device, the method further comprises:
receiving, by the third network device, a second allowed slice from a second network device; and
receiving, by the third network device, a first requested slice from the first network device, wherein
the first requested slice and the second allowed slice are from a same terminal, and the second allowed slice and the first requested slice do not share a same NSSRG.

31. The method according to claim 28, wherein before sending, by the third network device, the second message to the first network device, the method further comprises:
receiving, by the third network device, a first requested slice from the first network device; and
receiving, by the third network device, a second requested slice from a second network device, wherein
the first requested slice and the second requested slice are from a same terminal, and the first requested slice and the second requested slice do not share a same NSSRG.

32. The method according to claim 28, wherein before sending, by the third network device, the second message to the first network device, the method further comprises:
receiving, by the third network device, a first NSSRG from the first network device; and
receiving, by the third network device, a second NSSRG from a second network device, wherein
the first NSSRG and the second NSSRG are from a same terminal, and the first NSSRG and the second NSSRG do not share a same value.

33. The method according to claim 28, wherein the second message further comprises registration reject indication information.

34. The method according to claim 28, wherein the second message further comprises a slice that does not share an NSSRG.

35. A communication method, comprising:
receiving, by a first network device, a second message from a third network device, wherein the second message comprises indication information indicating non-sharing of a same network slice simultaneous registration group NSSRG, and the indication information indicates that slices do not share a same NSSRG; and
sending, by the first network device, a first message to a terminal device based on the indication information, wherein the first message comprises indication information indicating non-sharing of an NSSRG, and the indication information indicating non-sharing of an NSSRG indicates that slices do not share a same NSSRG.

36. The method according to claim 35, wherein before receiving, by the first network device, the second message from the third network device, the method further comprises:
sending, by the first network device, a first allowed slice to the third network device.

37. The method according to claim 35, wherein before receiving, by the first network device, the second message from the third network device, the method further comprises:
sending, by the first network device, a first requested slice to the third network device.

38. The method according to claim 35, wherein before receiving, by the first network device, the second message from the third network device, the method further comprises:
sending, by the first network device, a first NSSRG to the third network device.

39. A communication apparatus, comprising a processor and a memory, wherein the memory is configured to store code instructions, and the processor is configured to run the code instructions, to perform the method according to any one of claims 1 to 8, perform the method according to any one of claims 9 to 12, perform the method according to claim 13 or 14, perform the method according to any one of claims 15 to 23, perform the method according to claim 24 or 25, perform the method according to claim 26 or 27, perform the method according to any one of claims 28 to 34, or perform the method according to any one of claims 35 to 38.

40. A chip system, comprising: a processor, configured to invoke a computer program from a memory and run the computer program, to enable a communication device on which the chip system is installed to perform the method according to any one of claims 1 to 8, perform the method according to any one of claims 9 to 12, perform the method according to claim 13 or 14, perform the method according to any one of claims 15 to 23, perform the method according to claim 24 or 25, perform the method according to claim 26 or 27, perform the method according to any one of claims 28 to 34, or perform the method according to any one of claims 35 to 38.

41. A computer-readable storage medium, wherein the computer-readable storage medium stores a computer program, and when the computer program runs on a computer, the method according to any one of claims 1 to 8 is performed, the method according to any one of claims 9 to 12 is performed, the method according to claim 13 or 14 is performed, the method according to any one of claims 15 to 23 is performed, the method according to claim 24 or 25 is performed, the method according to claim 26 or 27 is performed, the method according to any one of claims 28 to 34 is performed, or the method according to any one of claims 35 to 38 is performed.

42. A computer program product, wherein the computer program product comprises instructions, and when the instructions are executed, the method according to any one of claims 1 to 8 is performed, the method according to any one of claims 9 to 12 is performed, the method according to claim 13 or 14 is performed, the method according to any one of claims 15 to 23 is performed, the method according to claim 24 or 25 is performed, the method according to claim 26 or 27 is performed, the method according to any one of claims 28 to 34 is performed, or the method according to any one of claims 35 to 38 is performed.
